# EUROPEAN PATENT APPLICATION

(11) **EP 4 694 333 A1**
(43) Date of publication of application: **11.02.2026**
(21) Application number: 24784443.4
(22) Date of filing: 07.04.2024
(51) Int. Cl.: H04W 36/00

(54) **CONDITIONAL PRIMARY SECONDARY CELL ADDITION OR CHANGE (CPAC) CONFIGURATION METHOD AND APPARATUS, AND RELATED PRODUCT**

(30) Priority: 07.04.2023 CN 202310367843
(71) Applicant: Vivo Mobile Communication Co., Ltd., Dongguan, Guangdong 523863 (CN)
(72) Inventor: LIU, Xuanbing, Dongguan, Guangdong 523863 (CN); BAO, Wei, Dongguan, Guangdong 523863 (CN)
(74) Representative: Walaski, Jan Filip
(86) International application number: PCT/CN2024/086425
(87) International publication number: WO 2024/208362

(57) **Abstract**

This application discloses a CPAC configuration method and apparatus, and a related product, and relates to the field of communications technologies. The CPAC configuration method in embodiments of this application includes: UE receives target configuration information sent by a network side device, where the target configuration information is used to configure at least one first candidate cell for subsequent CPAC, and the at least one first candidate cell is available for an intra-SN CPC process and an inter-SN CPC process; and the UE performs a first operation to change from a source primary secondary cell PSCell to a target PSCell, where the first operation includes at least one of the following: the intra-SN CPC process and the inter-SN CPC process, and the target PSCell is the first candidate cell of the at least one first candidate cell.

## Description

This application claims priority to Chinese Patent Application No. 2023103678434, filed with the China National Intellectual Property Administration on April 7, 2023 and entitled "CONDITIONAL PRIMARY SECONDARY CELL ADDITION OR CHANGE CPAC CONFIGURATION METHOD AND APPARATUS, AND RELATED PRODUCT", which is incorporated herein by reference in its entirety.

### TECHNICAL FIELD

This application relates to the field of communications technologies, and specifically, to a CPAC configuration method and apparatus, and a related product.

### BACKGROUND

Currently, a candidate cell for an intra secondary node conditional primary secondary cell change (intra Secondary Node Conditional PSCell Change, intra-SN CPC) process and a candidate cell for an inter secondary node conditional primary secondary cell change (inter Secondary Node Conditional PSCell Change, inter-SN CPC) process are configured separately. In a subsequent conditional primary secondary cell (Primary Secondary cell, PSCell) addition or change (Conditional PSCell Addition or Change, CPAC) process, a network side device may configure two groups of candidate cells for user equipment (User Equipment, UE). One group of candidate cells in the two groups of candidate cells is used for the intra secondary node conditional primary secondary cell change (intra Secondary Node Conditional PSCell Change, intra-SN CPC) process, and the other group of candidate cells is used for the inter secondary node conditional primary secondary cell change (inter Secondary Node Conditional PSCell Change, inter-SN CPC) process. Therefore, the UE may perform the intra-SN CPC process to change from a source PSCell to a candidate cell in the one group of candidate cells, or may perform the inter-SN CPC process to change from a source PSCell to a candidate cell in the other group of candidate cells.

However, because some candidate cells may need to be configured for the intra-SN CPC process and the inter-SN CPC process, in this case, some candidate cells may be configured in the above two groups of candidate cells. That is, the two groups of candidate cells may include some overlapping candidate cells. As a result, quantities of candidate cells in the two groups of candidate cells are large. In a case of a limited quantity of configurable candidate cells, a network cannot provide conditional handover configuration for more different candidate cells. Consequently, coverage performance of subsequent CPAC is limited.

### SUMMARY

Embodiments of this application provide a CPAC configuration method and apparatus, and a related product, which can resolve a problem of limited coverage performance of subsequent CPAC.

According to a first aspect, a CPAC configuration method is provided, and is performed by UE. The method includes: The UE receives target configuration information sent by a network side device, where the target configuration information is used to configure at least one first candidate cell for subsequent CPAC, and the at least one first candidate cell is available for an intra-SN CPC process and an inter-SN CPC process; and the UE performs a first operation to change from a source PSCell to a target PSCell, where the first operation includes at least one of the following: the intra-SN CPC process and the inter-SN CPC process, and the target PSCell is the first candidate cell of the at least one first candidate cell.

According to a second aspect, a CPAC configuration method is provided, and is performed by a master node MN. The method includes: The MN sends target configuration information to UE, where the target configuration information is used to configure at least one first candidate cell for subsequent CPAC, and the at least one first candidate cell is available for an intra-SN CPC process and an inter-SN CPC process; the at least one first candidate cell is used by the UE to perform a first operation to change from a source PSCell to a target PSCell; and the first operation includes at least one of the following: the intra-SN CPC process and the inter-SN CPC process, and the target PSCell is the first candidate cell of the at least one first candidate cell.

According to a third aspect, a CPAC configuration apparatus is provided. The CPAC configuration apparatus includes a receiving module and a processing module. The receiving module is configured to receive target configuration information sent by a network side device, where the target configuration information is used to configure at least one first candidate cell for subsequent CPAC, and the at least one first candidate cell is available for an intra-SN CPC process and an inter-SN CPC process, the processing module is configured to perform a first operation to change from a source PSCell to a target PSCell, where the first operation includes at least one of the following: the intra-SN CPC process and the inter-SN CPC process, and the target PSCell is the first candidate cell of the at least one first candidate cell.

According to a fourth aspect, a CPAC configuration apparatus is provided. The CPAC configuration apparatus includes a sending module. The sending module is configured to send target configuration information to UE, where the target configuration information is used to configure at least one first candidate cell for subsequent CPAC, and the at least one first candidate cell is available for an intra-SN CPC process and an inter-SN CPC process; the at least one first candidate cell is used by the UE to perform a first operation to change from a source PSCell to a target PSCell; and the first operation includes at least one of the following: the intra-SN CPC process and the inter-SN CPC process, and the target PSCell is the first candidate cell of the at least one first candidate cell.

According to a fifth aspect, a terminal is provided. The terminal includes a processor and a memory, the memory stores a program or an instruction that is executable on the processor, and the program or the instruction is executed by the processor to implement the steps of the method according to the first aspect.

According to a sixth aspect, a terminal is provided, which includes a processor and a communication interface. The communication interface is configured to receive target configuration information sent by a network side device, where the target configuration information is used to configure at least one first candidate cell for subsequent CPAC, and the at least one first candidate cell is available for an intra-SN CPC process and an inter-SN CPC process; and the processor is configured to perform a first operation to change from a source PSCell to a target PSCell, where the first operation includes at least one of the following: the intra-SN CPC process and the inter-SN CPC process, and the target PSCell is the first candidate cell of the at least one first candidate cell.

According to a seventh aspect, a network side device is provided. The network side device includes a processor and a memory, the memory stores a program or an instruction that is executable on the processor, and the program or the instruction is executed by the processor to implement the steps of the method according to the second aspect.

According to an eighth aspect, a network side device is provided, which includes a processor and a communication interface. The communication interface is configured to send target configuration information to UE, where the target configuration information is used to configure at least one first candidate cell for subsequent CPAC, and the at least one first candidate cell is available for an intra-SN CPC process and an inter-SN CPC process; the at least one first candidate cell is used by the UE to perform a first operation to change from a source PSCell to a target PSCell; and the first operation includes at least one of the following: the intra-SN CPC process and the inter-SN CPC process, and the target PSCell is the first candidate cell of the at least one first candidate cell.

According to a ninth aspect, a readable storage medium is provided. The readable storage medium stores a program or an instruction, and when the program or the instruction is executed by a processor, the steps of the method according to the first aspect are implemented, or the steps of the method according to the second aspect are implemented.

According to a tenth aspect, a wireless communication system is provided, and includes a terminal and a network side device. The terminal may be configured to perform the steps of the method according to the first aspect, and the network side device may be configured to perform the steps of the method according to the second aspect.

According to an eleventh aspect, a chip is provided. The chip includes a processor and a communication interface. The communication interface is coupled to the processor, and the processor is configured to run a program or an instruction to implement the steps of the method according to the first aspect or implement the steps of the method according to the second aspect.

According to a twelfth aspect, a computer program/program product is provided. The computer program/program product is stored in a storage medium, and the program/program product is executed by at least one processor to implement the steps of the method according to the first aspect or implement the steps of the method according to the second aspect.

In the embodiments of this application, the UE may receive the target configuration information for configuring the at least one first candidate cell for subsequent CPAC from the network side device, where the at least one first candidate cell is available for the intra-SN CPC process and the inter-SN CPC process, and perform at least one of the intra-SN CPC process and the inter-SN CPC process to change from the source PSCell to the target PSCell in the at least one first candidate cell. Because the at least one first candidate cell configured by the network side device is available for the intra-SN CPC process and the inter-SN CPC process, this can avoid a case that the at least one first candidate cell includes an overlapping candidate cell, that is, can reduce a quantity of first candidate cells of the at least one first candidate cell. Therefore, in a case of a limited quantity of configurable candidate cells, the network side device can provide conditional handover configuration for more different candidate cells. In this way, coverage performance of subsequent CPAC can be improved.

In the embodiments of this application, the MN may send the target configuration information for configuring the at least one first candidate cell for subsequent CPAC to the UE, where the at least one first candidate cell is available for the intra-SN CPC process and the inter-SN CPC process, so that the UE can perform at least one of the intra-SN CPC process and the inter-SN CPC process to change from the source PSCell to the target PSCell in the at least one first candidate cell. Because the at least one first candidate cell configured by the MN is available for the intra-SN CPC process and the inter-SN CPC process, this can avoid a case that the at least one first candidate cell includes an overlapping candidate cell, that is, can reduce a quantity of first candidate cells of the at least one first candidate cell. Therefore, in a case of a limited quantity of configurable candidate cells, the network side device can provide conditional handover configuration for more different candidate cells. In this way, coverage performance of subsequent CPAC can be improved.

### BRIEF DESCRIPTION OF DRAWINGS

FIG. 1 is a block diagram of a wireless communication system according to an embodiment of this application;
FIG. 2 is a first flowchart of a CPAC configuration method according to an embodiment of this application;
FIG. 3 is a second flowchart of a CPAC configuration method according to an embodiment of this application;
FIG. 4 is a third flowchart of a CPAC configuration method according to an embodiment of this application;
FIG. 5 is a first schematic diagram of node interaction in a CPAC configuration method according to an embodiment of this application;
FIG. 6 is a second schematic diagram of node interaction in a CPAC configuration method according to an embodiment of this application;
FIG. 7 is a third schematic diagram of node interaction in a CPAC configuration method according to an embodiment of this application;
FIG. 8 is a fourth schematic diagram of node interaction in a CPAC configuration method according to an embodiment of this application;
FIG. 9 is a first schematic diagram of a structure of a CPAC configuration apparatus according to an embodiment of this application;
FIG. 10 is a second schematic diagram of a structure of a CPAC configuration apparatus according to an embodiment of this application;
FIG. 11 is a schematic diagram of a structure of a communication device according to an embodiment of this application;
FIG. 12 is a schematic diagram of a hardware structure of a terminal according to an embodiment of this application; and
FIG. 13 is a schematic diagram of a hardware structure of a network side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

The following describes terms used in the embodiments of this application.

### 1. Master node (Master Node, MN) and secondary node (Secondary Node, SN)

Currently, in a dual connectivity (Dual Connectivity, DC) network architecture, a network side device may provide resources of two network nodes (access network elements) for UE, one of the network nodes is referred to as an MN, and the other is referred to as an SN.

A carrier aggregation technology is used at each network node, that is, a series of serving cells controlled by the node are configured for the UE, which is also referred to as a cell group (Cell Group, CG). A cell group controlled by the MN is a master cell group (Master Cell Group, MCG), and a cell group controlled by the secondary node SN is a secondary cell group (Secondary Cell Group, SCG). Each cell group includes a special cell (Special Cell, SpCell) and a series of secondary cells (Secondary Cell, Scell). In the MCG, the special cell is referred to as a primary cell (Primary Cell, PCell), and in the SCG, the special cell is referred to as a primary secondary cell (Primary Secondary Cell, PSCell). In one cell group, the SpCell uses a primary carrier, while another secondary cell uses a secondary carrier, and resource scheduling in one cell group is performed by the SpCell.

### 2. CPAC

CPAC usually includes conditional primary secondary cell addition (Conditional PSCell Addition, CPA) and conditional primary secondary cell change (Conditional PSCell Change, CPC).

CPA is that UE receives a CPA configuration from a network side device. The CPA configuration includes a configuration and an execution condition of a candidate cell for CPA, and the execution condition is evaluated. Therefore, the UE may determine a cell from candidate cells for CPA after the execution condition is met, and execute CPA on the cell to add the cell as a PSCell.

CPC is that the UE receives a CPC configuration from the network side device. The CPC configuration includes a configuration and an execution condition of a candidate cell for CPC, and the execution condition is evaluated. Therefore, the UE may determine a cell (that is, a target PSCell) from candidate cells for CPC after the execution condition is met, and execute CPC on the target PSCell to change from a PSCell to the target PSCell.

Herein, CPC may include multiple scenarios, such as intra SN conditional primary secondary cell change (intra-SN CPC), and inter SN conditional primary secondary cell change (inter-SN CPC), where inter-SN CPC may include MN initiated inter SN conditional primary secondary cell change (MN initiated inter-SN CPC) and SN initiated inter SN conditional primary secondary cell change (SN initiated inter-SN CPC).

For example, an MN initiated inter-SN CPC scenario is used as an example, MN initiated inter-SN CPC may include the following steps.

Step 1: An MN initiates CPC. The MN sends an SN addition request to at least one target SN (Target-SN, T-SN).

Step 2: The T-SN sends SN addition acknowledge information to the MN, including configuration information of one or more candidate cells.

Step 3: The MN sends early data forwarding information to a source secondary node S-SN (that is, a current serving SN).

Step 4: The MN sends an RRC reconfiguration message to UE, including a CPC command.

Step 5: The UE sends a reconfiguration complete message to confirm that the RRC reconfiguration message is received.

Step 6: The UE triggers a CPC execution condition, that is, the CPC execution condition is met, and sends an RRC reconfiguration complete message.

Step 7: The MN sends late data forwarding information to the S-SN.

Step 8: The MN sends an SN reconfiguration complete message to the T-SN.

Step 9: The UE randomly accesses the T-SN.

### 3. Subsequent CPAC

Subsequent CPAC may be understood that after the network side device configures CPAC for the UE, the UE may not need reconfiguration of the network side device in two subsequent CPAC processes.

For example, it is assumed that a source PSCell of the UE is a cell on an SN 1.

Subsequent CPAC may include the following steps.

Step 1: The UE receives a radio resource control (Radio Resource Control, RRC) reconfiguration message from the network side device. The RRC reconfiguration message includes a configuration of subsequent CPAC and multiple execution conditions. The configuration includes candidate cells 1 to 6 for CPAC.

Step 2: After one execution condition is met, the UE may execute CPAC for the first time to change from the source PSCell to the candidate cell 2 for CPAC.

Step 3: After another execution condition is met, the UE may execute CPAC for the second time to change from the source PSCell (that is, the candidate cell 2 for CPAC) to the candidate cell 4 for CPAC.

It may be understood that there is no need for reconfiguration of the network side device between the UE executing CPAC for the first time and executing CPAC for the second time.

### 4. Other terms

Terms such as "first" and "second" in this application are used to distinguish between similar objects, and are not used to describe a specific order or sequence. It should be understood that, the terms used in such a way are interchangeable in proper circumstances, so that the embodiments of this application can be implemented in an order other than the order illustrated or described herein. Objects classified by "first" and "second" are usually of a same type, and a quantity of objects is not limited. For example, there may be one or more first objects. In addition, "or" in this application means at least one of the connected objects. For example, "A or B" includes three solutions, namely: solution 1: include A but exclude B; solution 2: include B but exclude A; solution 3: include both A and B. The character "/" usually indicates an "or" relationship between the associated objects.

The term "indication" in this application may be a direct indication (or explicit indication) or an indirect indication (or implicit indication). The direct indication may be understood as that a sender explicitly notifies a sent indication of content such as specific information, an operation that needs to be performed, or a request result to a receiver. The indirect indication may be understood as that the receiver determines corresponding information according to the indication sent by the sender, or performs determining according to the indication sent by the sender, and determines, according to a determining result, the operation that needs to be performed, the request result, or the like.

It should be noted that technologies described in the embodiments of this application are not limited to a Long Term Evolution (Long Term Evolution, LTE)/LTE-Advanced (LTE-Advanced, LTE-A) system, and may be further applied to other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), single-carrier frequency-division multiple access (Single-carrier Frequency-Division Multiple Access, SC-FDMA), or other systems. The terms "system" and "network" in the embodiments of this application may be used interchangeably. The technologies described can be applied to both the systems and the radio technologies mentioned above as well as to other systems and radio technologies. A new radio (New Radio, NR) system is described in the following descriptions for illustrative purposes, and the NR terminology is used in most of the following descriptions, although these technologies can also be applied to a system other than the NR system, such as a 6^{th} generation (6^{th} Generation, 6G) communication system.

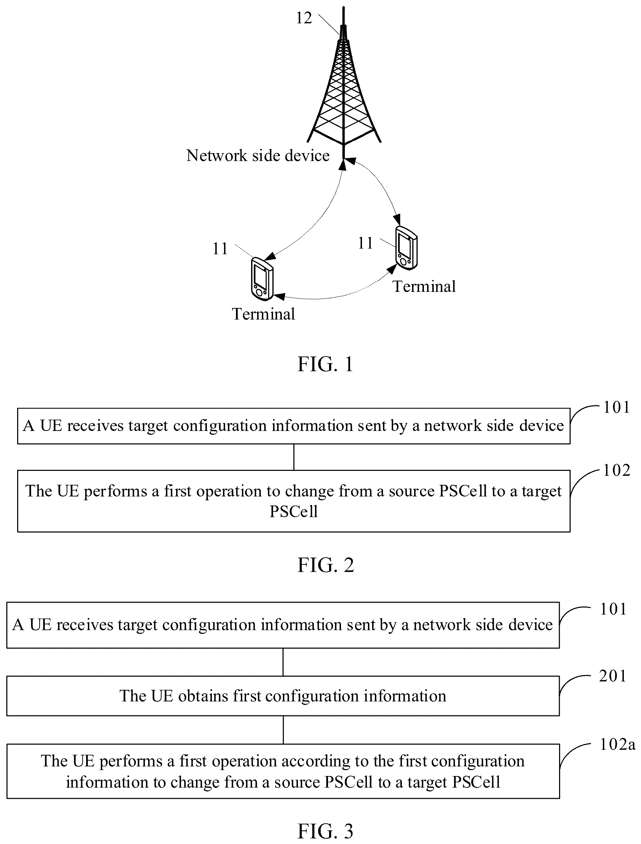

FIG. 1 is a block diagram of a wireless communication system to which embodiments of this application may be applied. The wireless communication system includes a terminal 11 and a network side device 12. The terminal 11 may be a terminal side device such as a mobile phone, a tablet personal computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile internet device (Mobile internet Device, MID), an augmented reality (Augmented Reality, AR) device, a virtual reality (Virtual Reality, VR) device, a robot, a wearable device (Wearable Device), a flight vehicle (flight vehicle), vehicle user equipment (Vehicle User Equipment, VUE), ship user equipment, pedestrian user equipment (Pedestrian User Equipment, PUE), a smart home (a home device with a wireless communication function, such as a refrigerator, a television, a washing machine, or a furniture), a game console, a personal computer (Personal Computer, PC), a teller machine, or a self-service machine. The wearable device includes a smart watch, a smart band, a smart headset, smart glasses, smart jewelry (a smart bangle, a smart bracelet, a smart ring, a smart necklace, a smart anklet, a smart chain, and the like), a smart wrist strap, a smart dress, and the like. The vehicle user equipment may also be referred to as a vehicle terminal, a vehicle controller, a vehicle module, a vehicle component, a vehicle chip, a vehicle unit, or the like. It should be noted that a specific type of the terminal 11 is not limited in the embodiments of this application. The network side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AS), wireless fidelity (Wireless Fidelity, WiFi) node, or the like. The base station may be referred to as a NodeB (NodeB, NB), an evolved NodeB (Evolved NodeB, eNB), a next generation NodeB (the next generation NodeB, gNB), a new radio NodeB (New Radio NodeB, NR NodeB), an access point, a relay base station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another appropriate term in the field. Provided that a same technical effect is achieved, the base station is not limited to a specified technical term. It should be noted that, in the embodiments of this application, only a base station in an NR system is used as an example for description, and a specific type of the base station is not limited.

With reference to the accompanying drawings, the following describes in detail a CPAC configuration method and apparatus, and a related product provided in the embodiments of this application by using some embodiments and application scenarios thereof.

FIG. 2 is a flowchart of a CPAC configuration method according to an embodiment of this application. As shown in FIG. 2, the CPAC configuration method provided in this embodiment of this application may include the following step 101 and step 102.

Step 101: A UE receives target configuration information sent by a network side device.

Optionally, in this embodiment of this application, the network side device may be an MN or an SN.

Optionally, in this embodiment of this application, the UE may receive an RRC reconfiguration message from the network side device, and the RRC reconfiguration message includes the target configuration information.

In this embodiment of this application, the target configuration information is used to configure at least one first candidate cell for subsequent CPAC, and the at least one first candidate cell is available for an intra-SN CPC process and an inter-SN CPC process.

Optionally, in this embodiment of this application, the at least one first candidate cell includes at least one candidate cell belonging to an SN different from a source SN to which a source PSCell belongs.

It should be noted that the "source SN to which the source PSCell belongs" may be understood as that the source PSCell is configured by the source SN.

For example, it is assumed that a current source PSCell of the UE is a PSCell configured by an SN 1. The UE receives target configuration information, where the target configuration information is used to configure a cell A and a cell B configured by an SN 2. The cell A is used for inter-SN CPC, that is, the UE may perform the inter-SN CPC process to change from the PSCell configured by the SN 1 to the cell A configured by the SN 2, and the UE may perform the intra-SN CPC process to change from the cell B configured by the SN 2 to the cell A configured by the SN 2. In other words, the cell B is available for the intra-SN CPC process and the inter-SN CPC process. The cell A and the cell B include at least one candidate cell (that is, the cell A and the cell B) belonging to an SN different from the SN 1. That is, the cell A and the cell B configured by using the target configuration information are available for the intra-SN CPC process and the inter-SN CPC process.

Step 102: The UE performs a first operation to change from the source PSCell to a target PSCell.

Optionally, in this embodiment of this application, the target configuration information may further include an execution condition, so that the UE may evaluate the execution condition, and after the execution condition is met, determine the target PSCell from the at least one first candidate cell, and perform the first operation according to the target PSCell to change from the source PSCell to the target PSCell.

In this embodiment of this application, the first operation includes at least one of the following: the intra-SN CPC process and the inter-SN CPC process, and the target PSCell is the first candidate cell of the at least one first candidate cell.

It should be noted that for specific descriptions of the intra-SN CPC process and the inter-SN CPC process, refer to specific descriptions in a related technology. Details are not described herein again in this embodiment of this application.

Optionally, in this embodiment of this application, after the UE determines the target PSCell, the UE may first obtain another piece of configuration information (for example, first configuration information in the following embodiment), and then determine, according to the first configuration information, whether the first operation includes the intra-SN CPC process or the inter-SN CPC process, to change from the source PSCell to the target PSCell.

It should be noted that in a subsequent CPAC process, the source PSCell is not fixed. For example, when the UE performs a first CPC process, the source PSCell is a PSCell currently serving the UE. After the first CPC process is performed, the UE changes from the PSCell currently serving the UE to the cell A. When the UE performs a second CPC process, the source PSCell is the cell A, and so on.

Further, with reference to FIG. 2, as shown in FIG. 3, before step 102, the CPAC configuration method provided in this embodiment of this application may further include the following step 201, and step 102 may be specifically implemented by using the following step 102a.

Step 201: The UE obtains first configuration information.

Optionally, in this embodiment of this application, the first configuration information includes at least one of the following:
at least one first secondary node key counter list (SK-counter list);
first indication information;
at least one first cell list; and
first cell deployment information.

In this embodiment of this application, each first SK-counter list includes at least one SK-counter.

It should be noted that for descriptions of the SK-counter, refer to specific descriptions in the related technology. Details are not described herein again in this embodiment of this application.

Optionally, in this embodiment of this application, each first SK-counter list is associated with at least one of the following:
one SN;
one first candidate cell set; and
one first candidate cell.

Further, in a case that the first SK-counter list is associated with one SN, all candidate cells configured by the SN are associated with the corresponding first SK-counter list.

Further, a candidate cell in one first candidate cell set is associated with one first SK-counter list.

It may be understood that all candidate cells in the first candidate cell set are associated with the corresponding first SK-counter list.

Specifically, in a case that the first SK-counter list is associated with one first candidate cell set, each candidate cell in the first candidate cell set belongs to a same SN.

Further, in a case that the first SK-counter list is associated with one first candidate cell, the first candidate cell uses an SK-counter included in the first SK-counter list.

Specifically, in a case that each first SK-counter list is associated with one first candidate cell, candidate cells belonging to a same SN may be associated with a same first SK-counter list.

In this embodiment of this application, the first indication information is used to indicate whether to use an SK-counter in the first SK-counter list in a process of performing the first operation.

Optionally, in this embodiment of this application, the first indication information is used to indicate whether to use an SK-counter in the first SK-counter list corresponding to the target PSCell in a process of performing the first operation.

Further, the first indication information may indicate, according to a candidate cell combination, whether to use an SK-counter in the first SK-counter list corresponding to the candidate cell combination in a process of performing the first operation.

For example, the first indication information may indicate not to use the SK-counter in the first SK-counter list when the first operation is performed between a candidate cell A, a candidate cell B, and a candidate cell C.

In this embodiment of this application, each first cell list includes identification information of at least one first cell, and an SN key needs to be updated or an SN key does not need to be updated for PSCell change between first cells whose identification information is in a same first cell list. The SN key may also be referred to as a secondary node key, a secondary key, or a secondary cell group key.

For example, it is assumed that the at least one first cell list includes a cell list C {cell X, Y, Z}. Then, in a case that the SN key is updated for the PSCell change between the first cells whose identification information is in the same first cell list, the UE needs to update the SN key, that is, change the SN key, for PSCell change between the cells X, Y, and Z.

For another example, it is assumed that the at least one first cell list includes a cell list A {cell 1, 2, 3} and a cell list B {cell 4, 5, 6}. The source PSCell (that is, the current serving PSCell) of the UE may be a cell in the cell list A and the cell list B, such as the cell 1, 2, 3, 4, 5, 6, or the like. Then, in a case that the SN key does not need to be updated for the PSCell change between the first cells whose identification information is in the same first cell list, the UE does not update the SN key, that is, does not change the SN key for PSCell change in the cell list A, that is, between the cells 1, 2, and 3, and the UE does not update the SN key for PSCell change between the cells 4, 5, and 6. Alternatively, the SN key needs to be updated for PSCell change across cell lists, for example, the SN key needs to be updated for PSCell change between a cell in the cell list A and a cell in the cell list B.

In this embodiment of this application, the first cell deployment information is used to indicate a change type for PSCell change to the first candidate cell, and the change type includes any one of the following: intra-SN CPC and inter-SN CPC. The PSCell may be a cell in the source PSCell and the at least one first candidate cell.

Optionally, in this embodiment of this application, the first cell deployment information includes at least one of the following:
at least one first candidate cell list;
at least one second candidate cell set;
at least one piece of second indication information; and
at least one piece of third indication information.

Further, each first candidate cell list includes identification information of the first candidate cell belonging to a same SN in the at least one first candidate cell.

Specifically, for each of the at least one first candidate cell list, first candidate cells in one first candidate cell list may belong to a same SN.

It may be understood that in a case that first candidate cells in each first candidate cell list belong to a same SN, the UE may obtain, according to the at least one first candidate cell list, all first candidate cells belonging to the same SN.

Specifically, the identification information includes at least one of the following:
a permanent cell identifier;
a temporary cell identifier; and
a conditional reconfiguration identifier.

Herein, the permanent cell may include at least one of the following: a physical cell identifier ID plus an SSB frequency, a cell identifier (CellIdentity), and the like. CellIdentity is used to clearly identify a cell in a public land mobile network (Public Land Mobile Network, PLMN) or a standalone non-public network (Standalone Non-Public Network, SNPN).

Herein, the temporary cell identifier is used to distinguish the first candidate cell, and different first candidate cells have different temporary cell identifiers.

For example, the temporary cell identifier is at least unique in a source PCell or MN range.

It may be understood that in a case that the temporary cell identifier is at least unique in the source PCell or MN range, the UE may keep performing subsequent CPAC on a same PCell, and the at least one first candidate cell does not have an overlapped identifier.

Herein, the conditional reconfiguration identifier may be specifically condReconfigID.

It may be understood that deployment information of a candidate cell may be configured by using an existing conditional reconfiguration identifier, and there is no need to add additional information for definition, to reduce signaling load.

For example, it is assumed that the first cell deployment information includes the at least one first candidate cell list, and each first candidate cell list includes a conditional reconfiguration identifier of the first candidate cell belonging to a same SN in the at least one first candidate cell. In this case, the network side device may provide overall complete cell deployment information (that is, the first cell deployment information) for the configured first candidate cell, where a conditional reconfiguration information element ConditionalReconfiguration IE includes the first cell deployment information (cellDeployInfoList), and ConditionalReconfiguration is a conditional reconfiguration information element (Information Element, IE) included in an RRC reconfiguration message. In this way, the first cell deployment information (cellDeployInfoList) includes a cell conditional reconfiguration identifier corresponding to a first candidate cell per SN. The specific IE is as follows:
cellDeployInfoList::= SEQUENCE {
cellDeployInfo1: {1, 2, 3}, note: corresponding to the SN 1
cellDeployInfo2: {4, 5, 6}, note: corresponding to the SN 2

Further, each second candidate cell set corresponds to one first candidate cell, and each second candidate cell set includes identification information of the first candidate cell belonging to a same SN as the corresponding first candidate cell of the at least one first candidate cell.

For example, it is assumed that the first cell deployment information includes the at least one second candidate cell set, and each second candidate cell set includes a conditional reconfiguration identifier of the first candidate cell belonging to a same SN as the corresponding first candidate cell of the at least one first candidate cell. In this case, the network side device may provide, for each configured first candidate cell, cell deployment information of an SN to which the configured first candidate cell belongs. A conditional reconfiguration CondReconfigToAddMod IE includes the first cell deployment information (cellDeployInfo), and CondReconfigToAddMod is a candidate cell configuration included in the conditional reconfiguration ConditionalReconfiguration IE in the RRCReconfiguration message. In this way, the first cell deployment information (cellDeployInfo) includes the cell deployment information of the SN to which each configured first candidate cell belongs. For a first candidate cell whose conditional reconfiguration identifier condReconfigId is 1, 2 or 3, a specific IE is as follows:

```
          cellDeployInfo::= SEQUENCE {
          cellDeployInfo1: {1, 2, 3}
          }
```

### Note: cellDeployInfo1 corresponding to the SN 1

Further, each piece of second indication information corresponds to one first candidate cell, and each piece of second indication information is used to indicate at least one of the following: whether the corresponding first candidate cell and the source PSCell belong to a same SN, and the change type for change from the source PSCell to the corresponding first candidate cell.

For example, it is assumed that the first cell deployment information includes the at least one piece of second indication information. In this case, the network side device may provide the first cell deployment information for each configured first candidate cell, to indicate whether the corresponding first candidate cell and the source PSCell belong to the same SN. A conditional reconfiguration CondReconfigToAddMod IE includes the first cell deployment information (cellDeployInfo), and CondReconfigToAddMod is a candidate cell configuration included in the conditional reconfiguration ConditionalReconfiguration IE in the RRCReconfiguration message. In this way, the first cell deployment information (cellDeployInfo) includes an indication of whether the candidate cell and the source PSCell belong to a same SN. For example, a cellDeployInfo-Intra-SN indication is true, to indicate that the corresponding first candidate cell and the source PSCell belong to the same SN. In other words, the change type for change from the source PSCell to the corresponding first candidate cell is intra-SN CPC.

Further, each piece of third indication information corresponds to one first candidate cell, each piece of third indication information is used to indicate a node identifier of an SN to which the corresponding first candidate cell belongs, and different SNs have different node identifiers.

Optionally, in this embodiment of this application, step 201 may be specifically implemented by using the following step 201a or step 201b.

Step 201a: The UE receives the first configuration information from the network side device.

Optionally, in this embodiment of this application, the RRC reconfiguration message may further include the first configuration information, so that the UE may receive the RRC reconfiguration message to receive the target configuration information and the first configuration information.

Step 201b: The UE receives intra-SN CPC configuration information from the network side device, and determines the first configuration information according to the intra-SN CPC configuration information.

Optionally, in this embodiment of this application, the intra-SN CPC configuration information may be provided through a configuration of a radio bearer 3 (Signaling Radio Bearer 3, SRB3) or a secondary cell group (Secondary Cell Group, SCG).

Optionally, in this embodiment of this application, after the UE obtains the first configuration information, the UE may store the first configuration information. After the UE stores the first configuration information, in a case that the network side device configures new first configuration information, the UE may add, modify or remove the previously stored first configuration information according to the new first configuration information.

Further, the UE may store the new first configuration information configured by the network side device.

Step 102a: The UE performs the first operation according to the first configuration information to change from the source PSCell to the target PSCell.

In the related technology, the UE may determine an intra-SN CPC or inter-SN CPC handover procedure based on the target configuration information according to a CPAC scenario. However, in the CPC handover procedure, the UE may not be able to know whether the source PSCell and the target PSCell belong to the same SN. As a result, the UE cannot identify whether the CPC process of change from the source PSCell to the target PSCell is an intra-SN CPC process. However, in this embodiment of this application, the UE may obtain the first configuration information, perform the first operation according to the first configuration information, and determine whether the change from the source PSCell to the target PSCell is an intra-SN CPC process or an inter-SN CPC process, to determine whether the UE uses a new SK-counter in the CPC handover procedure instead of directly using the new SK-counter. Therefore, a case that the change from the source PSCell to the target PSCell is the intra-SN CPC process and the UE uses the new SK-counter can be reduced, to reduce re-establishment of an RLC layer and a PDCP layer, and further reduce a data packet loss in the intra-SN CPC process. In this way, performance of data transmission can be improved.

According to the CPAC configuration method provided in this embodiment of this application, the UE may receive the target configuration information for configuring the at least one first candidate cell for subsequent CPAC from the network side device, where the at least one first candidate cell is available for the intra-SN CPC process and the inter-SN CPC process, and perform at least one of the intra-SN CPC process and the inter-SN CPC process to change from the source PSCell to the target PSCell in the at least one first candidate cell. Because the at least one first candidate cell configured by the network side device is available for the intra-SN CPC process and the inter-SN CPC process, this can avoid a case that the at least one first candidate cell includes an overlapping candidate cell, that is, can reduce a quantity of first candidate cells of the at least one first candidate cell. Therefore, in a case of a limited quantity of configurable candidate cells, the network side device can provide conditional handover configuration for more different candidate cells. In this way, coverage performance of subsequent CPAC can be improved.

Certainly, the UE may further determine, according to the first configuration information, whether a new SK-counter needs to be started. Different CPC processes are used as examples for description below.

### Example 1: intra-SN CPC process

Optionally, in this embodiment of this application, the first configuration information includes the at least one first SK-counter list, and the first operation includes the intra-SN CPC process. The CPAC configuration method provided in this embodiment of this application may further include the following step 301.

Step 301: The UE does not update a first SN key using an SK-counter in the at least one first SK-counter list.

In this embodiment of this application, after the execution condition is met, in a case that the UE determines that the change type for change from the source PSCell to the target PSCell is intra-SN CPC, in a process of performing the first operation, the UE may not update the first SN key using the SK-counter in the at least one first SK-counter list.

In this embodiment of this application, the source PSCell communicates with the UE using the first SN key.

It should be noted that for descriptions of communicating with the UE using the first SN key, refer to specific descriptions in the related technology. Details are not described herein again in this embodiment of this application.

It may be understood that in the intra-SN CPC process, the UE does not use a new SK-counter, in other words, does not consume a configured SK-counter. In addition, an SN to which the target PSCell belongs does not consume a configured key. For example, in a case that the UE performs CPC change from a cell A of an SN 2 to the target PSCell cell B, the UE continues to use a current SK-counter in a cell B, that is, the SK-counter used in the cell A. The cell A and the cell B belong to a same SN, that is, the SN 2.

In this embodiment of this application, because the UE may not update the first SN key using the SK-counter in the at least one first SK-counter list, there may be no need to reestablish a radio link control (Radio Link Control, RLC) layer and a packet data convergence protocol (Packet Data Convergence Protocol, PDCP) layer, so that a data packet loss in the intra-SN CPC process can be avoided. In this way, performance of data transmission can be improved.

Optionally, in this embodiment of this application, the first configuration information includes the at least one first SK-counter list, and the first operation includes the intra-SN CPC process. After step 102, the CPAC configuration method provided in this embodiment of this application may further include the following step 103.

Step 103: The UE sends a first RRC reconfiguration complete ReconfigurationComplete message to the target PSCell.

In this embodiment of this application, after the UE triggers intra-SN CPC, the UE may directly send the first RRCReconfigurationComplete message to the target PSCell; or the UE may initiate random access on the target PSCell, and send the first RRCReconfigurationComplete message to the target PSCell.

In this embodiment of this application, the first RRCReconfigurationComplete message includes fourth indication information.

The fourth indication information is used to indicate at least one of the following:
a first change type for change from the source PSCell to the target PSCell;
whether a second SN key has been used; and
whether a first SK-counter has been used.

Herein, the first change type includes intra-SN CPC.

Herein, the second SN key is different from a first SN key, and the source PSCell communicates with the UE using the first SN key. It may be understood that the second SN key is a new key.

Herein, the first SK-counter may be an SK-counter corresponding to the target PSCell in the first SK-counter list in the at least one first SK-counter list. It may be understood that the first SK-counter is a new SK-counter.

The first SK-counter list corresponding to the target PSCell may include at least one of the following: a first SK-counter list corresponding to a first candidate cell belonging to a same SN as the target PSCell, a first SK-counter list corresponding to an SN to which the target PSCell belongs, and a first SK-counter list corresponding to a first candidate cell set to which the target PSCell belongs.

In this embodiment of this application, because the UE may indicate, to the target PSCell, the first change type for change from the source PSCell to the target PSCell, whether the second SN key has been used, and whether the first SK-counter has been used, processing of at least one of the SK-counter and the SN key by the UE and the network side device can be synchronized.

### Example 2: inter-SN CPC process

Optionally, in this embodiment of this application, the first configuration information includes the at least one first SK-counter list, and the first operation includes the inter-SN CPC process. The CPAC configuration method provided in this embodiment of this application may further include the following step 401.

Step 401: The UE performs a second operation, and uses a first SK-counter.

In this embodiment of this application, after the execution condition is met, in a case that the UE determines that the change type for change from the source PSCell to the target PSCell is inter-SN CPC, in a process of performing the first operation, the UE may perform the second operation, and use the first SK-counter.

In this embodiment of this application, the second operation includes any one of the following:
removing the first SK-counter from a second SK-counter list; and
adding a first marker to the first SK-counter in the second SK-counter list.

The second SK-counter list is the first SK-counter list corresponding to the target PSCell in the at least one first SK-counter list; and the first marker is used to mark an SK-counter that is not used or has been used by the UE. That is, the UE marks the first SK-counter in the second SK-counter list as unusable or used.

The second SK-counter list may include at least one of the following: a first SK-counter list corresponding to a first candidate cell belonging to a same SN as the target PSCell, a first SK-counter list corresponding to an SN to which the target PSCell belongs, and a first SK-counter list corresponding to a first candidate cell set to which the target PSCell belongs.

It may be understood that in the inter-SN CPC process, the UE consumes a configured SK-counters (that is, the first SK-counter), and removes the corresponding first SK-counter or adds the first marker to the corresponding first SK-counter in the second SK-counter list.

For example, it is assumed that candidate cells: cells A, B, and C are separately configured with an SK-counter list {X, Y, Z}. When the inter-SN CPC process is performed to hand over from another cell to the cell A, the candidate cell: cell A uses a new SK-counter X. The SK-counter X in the cells B and C is removed or marked as unusable.

Optionally, in this embodiment of this application, the first configuration information includes the at least one first SK-counter list, and the first operation includes the inter-SN CPC process. After step 102, the CPAC configuration method provided in this embodiment of this application may further include the following step 104.

Step 104: The UE sends a second RRCReconfigurationComplete message to the network side device.

In this embodiment of this application, after the UE triggers inter-SN CPC, the UE may directly send the second RRCReconfigurationComplete message to the target PSCell; or the UE may initiate random access on the target PSCell, and send the second RRCReconfigurationComplete message to the target PSCell.

In this embodiment of this application, the second RRCReconfigurationComplete message includes at least one of the following:
fifth indication information; and
a third RRCReconfigurationComplete message.

The fifth indication information is used to indicate at least one of the following:
a second change type for change from the source PSCell to the target PSCell;
whether a second SN key has been used; and
whether a first SK-counter has been used.

Herein, the second change type includes inter-SN CPC.

Herein, the second SN key is different from a first SN key, and the source PSCell communicates with the UE using the first SN key. It may be understood that the second SN key is a new key.

Herein, the first SK-counter may be an SK-counter corresponding to the target PSCell in the first SK-counter list in the at least one first SK-counter list. It may be understood that the first SK-counter is a new SK-counter.

The first SK-counter list corresponding to the target PSCell may include at least one of the following: a first SK-counter list corresponding to a first candidate cell belonging to a same SN as the target PSCell, a first SK-counter list corresponding to an SN to which the target PSCell belongs, and a first SK-counter list corresponding to a first candidate cell set to which the target PSCell belongs.

Herein, the third RRCReconfigurationComplete message includes the fifth indication information.

Optionally, in this embodiment of this application, the second RRCReconfigurationComplete message may further include an identifier ID of the target PSCell.

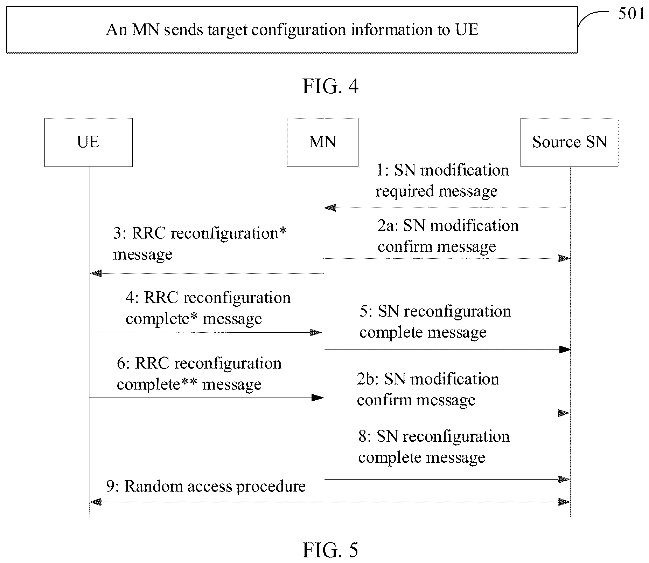

FIG. 4 is a flowchart of a CPAC configuration method according to an embodiment of this application. As shown in FIG. 4, the CPAC configuration method provided in this embodiment of this application may include the following step 501.

Step 501: An MN sends target configuration information to UE.

In this embodiment of this application, the target configuration information is used to configure at least one first candidate cell for subsequent CPAC, and the at least one first candidate cell is available for an intra-SN CPC process and an inter-SN CPC process.

In this embodiment of this application, the at least one candidate cell is used by the UE to perform a first operation to change from a source PSCell to a target PSCell; and the first operation includes at least one of the following: the intra-SN CPC process and the inter-SN CPC process, and the target PSCell is the first candidate cell of the at least one first candidate cell.

Optionally, in this embodiment of this application, the CPAC configuration method provided in this embodiment of this application may further include the following step 601.

Step 601: The MN sends first configuration information to the UE.

In this embodiment of this application, the first configuration information includes at least one of the following:
at least one first SK-counter list;
first indication information;
at least one first cell list; and
first cell deployment information.

In this embodiment of this application, each first SK-counter list includes at least one SK-counter.

Optionally, in this embodiment of this application, each first SK-counter list is associated with at least one of the following:
one SN;
one first candidate cell set; and
one first candidate cell, where
a candidate cell in one first candidate cell set is associated with one first SK-counter list.

In this embodiment of this application, the first indication information is used to indicate whether to use an SK-counter in the first SK-counter list in a process of performing the first operation.

In this embodiment of this application, each first cell list includes identification information of at least one first cell, and an SN key needs to be updated or an SN key does not need to be updated for PSCell change between first cells whose identification information is in a same first cell list.

In this embodiment of this application, the first cell deployment information is used to indicate a change type for PSCell change to the first candidate cell, and the change type includes any one of the following: intra-SN CPC and inter-SN CPC.

Optionally, in this embodiment of this application, the first cell deployment information includes at least one of the following:
at least one first candidate cell list;
at least one second candidate cell set;
at least one piece of second indication information; and
at least one piece of third indication information.

In this embodiment of this application, each first candidate cell list includes identification information of the first candidate cell belonging to a same SN in the at least one first candidate cell.

Further, the identification information includes at least one of the following:
a permanent cell identifier;
a temporary cell identifier; and
a conditional reconfiguration identifier, where
the temporary cell identifier is used to distinguish the first candidate cell, and different first candidate cells have different temporary cell identifiers.

In this embodiment of this application, each second candidate cell set corresponds to one first candidate cell, and each second candidate cell set includes identification information of the first candidate cell belonging to a same SN as the corresponding first candidate cell of the at least one first candidate cell.

In this embodiment of this application, each piece of second indication information corresponds to one first candidate cell, and each piece of second indication information is used to indicate at least one of the following: whether the corresponding first candidate cell and the source PSCell belong to a same SN, and the change type for change from the source PSCell to the corresponding first candidate cell.

In this embodiment of this application, each piece of third indication information corresponds to one first candidate cell, each piece of third indication information is used to indicate a node identifier of an SN to which the corresponding first candidate cell belongs, and different SNs have different node identifiers.

According to the CPAC configuration method provided in this embodiment of this application, the MN may send the target configuration information for configuring the at least one first candidate cell for subsequent CPAC to the UE, where the at least one first candidate cell is available for the intra-SN CPC process and the inter-SN CPC process, so that the UE can perform at least one of the intra-SN CPC process and the inter-SN CPC process to change from the source PSCell to the target PSCell in the at least one first candidate cell. Because the at least one first candidate cell configured by the MN is available for the intra-SN CPC process and the inter-SN CPC process, this can avoid a case that the at least one first candidate cell includes an overlapping candidate cell, that is, can reduce a quantity of first candidate cells of the at least one first candidate cell. Therefore, in a case of a limited quantity of configurable candidate cells, the network side device can provide conditional handover configuration for more different candidate cells. In this way, coverage performance of subsequent CPAC can be improved.

In this embodiment of this application, the subsequent CPAC process may be initiated by the MN or may be initiated by the source SN. Descriptions are provided below by using examples for different scenarios separately.

### Scenario 1: CPC process initiated by the source SN

Optionally, in this embodiment of this application, the CPC process is initiated by the source SN. Specifically, before step 501, the CPAC configuration method provided in this embodiment of this application may further include the following step 701.

Step 701: The MN receives a first SN message from the source SN.

It should be noted that the CPC process may include at least one of the following: the intra-SN CPC process and the inter-SN CPC process.

Optionally, in this embodiment of this application, the CPC process may be specifically the intra-SN CPC process.

In this embodiment of this application, the first SN message includes the first configuration information.

Optionally, in this embodiment of this application, the first SN message may be specifically an SN modification required message.

Optionally, in this embodiment of this application, the first SN message may further include the target configuration information.

Optionally, in this embodiment of this application, the first configuration information includes the first cell deployment information. Before step 501, the CPAC configuration method provided in this embodiment of this application may further include the following step 702 and step 703.

Step 702: The MN receives second cell deployment information.

In this embodiment of this application, the second cell deployment information is used to indicate the change type for PSCell change to the first candidate cell, and an information format of the second cell deployment information is different from that of the first cell deployment information.

Optionally, in this embodiment of this application, the first SN message may include the second cell deployment information.

It should be noted that for descriptions of content included in the second cell deployment information, refer to content included in the first cell deployment information in the foregoing embodiment. Details are not described herein again in this embodiment of this application.

Step 703: The MN converts the second cell deployment information into the first cell deployment information.

For example, it is assumed that the second cell deployment information may include at least one second candidate cell list and at least one third candidate cell set. Each second candidate cell list includes a permanent cell identifier of a first candidate cell belonging to a same SN in the at least one first candidate cell. Each third candidate cell set corresponds to one first candidate cell. Each third candidate cell set includes a permanent cell identifier of a first candidate cell belonging to a same SN as the corresponding first candidate cell of the at least one first candidate cell. Then, the MN may convert a permanent cell identifier of each first candidate cell of the at least one second candidate cell list into a conditional reconfiguration identifier, and convert a permanent cell identifier of a first candidate cell of the at least one third candidate cell set into a conditional reconfiguration identifier, to obtain the at least one first candidate cell list and the at least one second candidate cell set, and further obtain the first cell deployment information.

Optionally, in this embodiment of this application, the first configuration information includes the first cell deployment information. Before step 501, the CPAC configuration method provided in this embodiment of this application may further include the following step 704 and step 705.

Step 704: The MN receives the target configuration information.

Optionally, in this embodiment of this application, the MN may receive an SN message from the source SN, where the SN message includes configuration information for a part of candidate cells, and receive another SN message from another SN, where the another SN message includes configuration information for the other part of candidate cells, to obtain the target configuration information. It may be understood that the at least one first candidate cell may include the part of candidate cells and the other part of candidate cells.

Step 705: The MN generates the first cell deployment information according to the target configuration information.

Optionally, in this embodiment of this application, the MN may generate the first cell deployment information according to a respective SN (that is, the source SN) to which the at least one first candidate cell belongs.

It may be understood that handover between candidate cells configured in a same SN message is intra-SN CPC.

Optionally, in this embodiment of this application, the first configuration information includes the at least one first SK-counter list. Specifically, after step 501, the CPAC configuration method provided in this embodiment of this application may further include the following step 702 and step 703.

Step 702: The MN receives a fourth RRCReconfigurationComplete message from the UE.

In this embodiment of this application, the fourth RRCReconfigurationComplete message includes sixth indication information.

Step 703. The MN sends the sixth indication information to the source SN.

In this embodiment of this application, the sixth indication information is used to indicate at least one of the following:
a change type for change from the source PSCell to the target PSCell;
whether a second SN key has been used; and
whether a first SK-counter has been used, where
the change type includes any one of the following: intra-SN CPC and inter-SN CPC; and the second SN key is different from a first SN key, and the source PSCell communicates with the UE using the first SN key.

It may be understood that the second SN key is a new SN key, and the first SK-counter is a new SK-counter.

Optionally, in this embodiment of this application, the MN may send an SN reconfiguration complete message to the source SN. The SN reconfiguration complete message includes the sixth indication information.

Optionally, in this embodiment of this application, the first configuration information includes the at least one first SK-counter list. Specifically, the CPAC configuration method provided in this embodiment of this application may further include the following step 704.

Step 704. The MN sends a second SN message to the source SN.

It should be noted that an execution sequence of step 704 is not limited in this embodiment of this application. In a possible implementation, after receiving the first SN message, the MN may send the second SN message to the source SN. That is, the MN may first perform step 701, and then perform step 704. In another possible implementation, after receiving the fourth RRCReconfigurationComplete message, the MN may send the second SN message to the source SN. The MN may first perform step 702, and then perform step 704.

In this embodiment of this application, the second SN message includes a first SN key list, the first SN key list corresponds to one first SK-counter list, the first SN key list includes at least one third key, and the target PSCell communicates with the UE using the third SN key in the at least one third SN key.

Optionally, in this embodiment of this application, the first SN key list may be specifically: a serving-access network device (Serving-NG-RAN, S-NG-RAN) node security key list. Each third key may be an S-NG-RAN node security key.

Optionally, in this embodiment of this application, the first configuration information includes the at least one first SK-counter list. Specifically, after step 501, the CPAC configuration method provided in this embodiment of this application may further include the following step 706.

Step 706: The MN receives a second RRCReconfigurationComplete message from the UE.

In this embodiment of this application, the second RRCReconfigurationComplete message includes at least one of the following:
fifth indication information; and
a third RRCReconfigurationComplete message.

The fifth indication information is used to indicate at least one of the following:
a change type for change from the source PSCell to the target PSCell;
whether a second SN key has been used; and
whether a first SK-counter has been used, where
the change type includes any one of the following: intra-SN CPC and inter-SN CPC; the second SN key is different from a first SN key, and the source PSCell communicates with the UE using the first SN key; and the third RRCReconfigurationComplete message includes the fifth indication information.

For example, FIG. 5 is a schematic diagram of node interaction in a CPAC configuration method according to an embodiment of this application. The schematic diagram of node interaction shows that first configuration information is configured in a source SN initiated intra-SN CPC process. The process supports subsequent intra-SN CPC initiated by the source SN, including intra-SN CPC between at least one first candidate cell configured by the source SN. As shown in FIG. 5, the source SN initiated intra-SN CPC process includes the following steps.

Step 1: A source SN sends a first SN message (such as an SN modification required message, or a message 1 in FIG. 5) to an MN. The first SN message includes a CPC configuration (that is, target configuration information). The CPC configuration includes configuration information for at least one candidate cell (that is, at least one first candidate cell) available for subsequent intra-SN CPC or inter-SN CPC. The first SN message may include first configuration information.

Step 2: The MN may send an RRCReconfiguration message (such as a message 3 in FIG. 5) to UE. The RRCReconfiguration message includes the target configuration information. The RRCReconfiguration message may further include the first configuration information.

The first configuration information includes at least one of at least one first SK-counter list, first cell deployment information, and the like. The first cell deployment information includes second cell deployment information included in the first SN message, or is generated by the MN. Details are as follows.

Method 1: In a case that the first SN message includes the second cell deployment information, optionally, the MN converts the second cell deployment information included in the first SN message into the first cell deployment information to be sent to the UE. For example, the second cell deployment information includes a physical cell identifier of a candidate cell, and the MN converts the physical cell identifier of the candidate cell into a conditional reconfiguration identifier (condReconfigId) to obtain the first cell deployment information. Advantages are that by using the conditional reconfiguration identifier in the RRC Reconfiguration message configured for the UE, the UE is prevented from decoding a nested conditional reconfiguration to read the physical cell identifier of the candidate cell.

Method 2: The MN generates the first cell deployment information. For example, the MN generates cell deployment information according to configuration information for candidate cell included in multiple SN messages (SN messages received from the source SN and another SN). For example, handover between candidate cells configured in a same SN message is intra-SN CPC.

Step 3: The MN receives a second RRCReconfigurationComplete message (such as a message 4 in FIG. 5) sent by the UE. Optionally, the RRCReconfigurationComplete message may include a third RRCReconfigurationComplete message. The MN sends the third RRCReconfigurationComplete message (such as a message 5 in FIG. 5) to the source SN.

Step 4: The MN sends a second SN message (such as SN Modification CONFIRM) (such as a message 2a and a message 2b in FIG. 5) to the source SN, optionally before or after the MN receives the first RRCReconfigurationComplete message sent by the UE. Optionally, the second SN message includes at least one S-NG-RAN node security key list. The at least one S-NG-RAN node security key list corresponds one-to-one with at least one first SK-counter list configured by the MN for the UE.

Step 5: After the UE triggers intra-SN CPC, the UE initiates random access on a target PSCell.

In addition, the UE sends an RRCReconfigurationComplete message to a PCell of the MN or a target PSCell of the SN. The UE may send a second RRCReconfigurationComplete message to the target PSCell of the SN, or a fourth RRCReconfigurationComplete message to the PCell of the MN. Optionally, the third RRCReconfigurationComplete message includes at least one of an indication of whether intra-SN CPC is performed and an indication of whether a new SK-counter is used, to synchronize processing of the SK-counter by the UE and a network. It may be understood that in a case of intra-SN CPC, the new SK-counter is not used.

There are two implementation methods.

Method 1: The UE sends the second RRCReconfigurationComplete message to the PCell of the MN. The second RRCReconfigurationComplete message includes a conditional reconfiguration identifier condReconfigId.

The MN identities the target PSCell according to the conditional reconfiguration identifier. The MN sends the second SN message and/or the third RRCReconfigurationComplete message to the SN.

Optionally, at least one of the second SN message (such as the message 2b in FIG. 5) and the third RRCReconfigurationComplete message (such as a message 8 in FIG. 5) includes at least one of the indication of whether intra-SN CPC is performed and the indication of whether the new SK-counter is used. According to the method, it is convenient to indicate the S-NG-RAN node security key list used by the source SN or the target PSCell, and it is convenient to match the S-NG-RAN node security key used by the source SN or the target PSCell with the SK-counter used by the UE. This can prevent the source SN from determining the S-NG-RAN node security key or an intra-SN or inter-SN CPC handover type of the UE.

Method 2: The UE sends the second RRCReconfigurationComplete message to the target PSCell.

Optionally, the RRCReconfigurationComplete message includes at least one of an indication of whether intra-SN CPC is performed and an indication of whether a new SK-counter is used, to synchronize processing of the SK-counter and the SN key by the UE and the network.

In a case that handover from the source PSCell to the target PSCell is intra-SN CPC, the UE does not use the new SK-counter on the target PSCell. Alternatively, the UE continues to use the SK-counter used on the source PSCell. An advantage is that re-establishment of an RLC layer or a PDCP layer is avoided.

In this way, it is different from an existing SN initiated intra-SN CPC process. In a case that the existing SN initiated intra-SN CPC process is used to provide a candidate cell configuration, the configured candidate cell supports only intra-SN CPC and cannot support subsequent possible inter-SN CPC. Therefore, for the candidate cell included in the SN initiated intra-SN CPC configuration, a candidate cell configuration supporting inter-SN CPC may further need to be added. This results in multiple candidate cell configurations for same UE in a same physical cell. As a result, a quantity of conditional configurations or a quantity of candidate cells is increased. However, the quantity of candidate cells is limited. As a result, it is inconvenient for the network to provide conditional configurations for more different physical cells as the candidate cells.

Through the SN initiated intra-SN CPC process, it is convenient to control the quantity of candidate cells.

Optionally, in this embodiment of this application, the CPC process is initiated by the source SN. Specifically, before step 501, the CPAC configuration method provided in this embodiment of this application may further include at least one of step 801, step 802, and step 803.

Step 801: The MN receives a third SN message from the source SN.

Optionally, in this embodiment of this application, the CPC process may be specifically the inter-SN CPC process.

In this embodiment of this application, the third SN message is used to request to configure subsequent CPAC.

Optionally, in this embodiment of this application, the third SN message may be specifically an SN change required message.

Step 802: The MN sends a fourth SN message to the target SN.

In this embodiment of this application, the fourth SN message is used to request a candidate cell for subsequent CPAC, the fourth SN message includes a second SN key list, the second SN key list corresponds to one first SK-counter list, the second SN key list includes at least one fourth key, and the target PSCell communicates with the UE using the fourth key in the at least one fourth key.

Optionally, in this embodiment of this application, the fourth SN message may be specifically an SN addition request message.

Step 803: The MN receives a fifth SN message from the target SN.

In this embodiment of this application, the fifth SN message includes the first configuration information.

Optionally, in this embodiment of this application, the fifth SN message may be specifically an SN addition request acknowledge message.

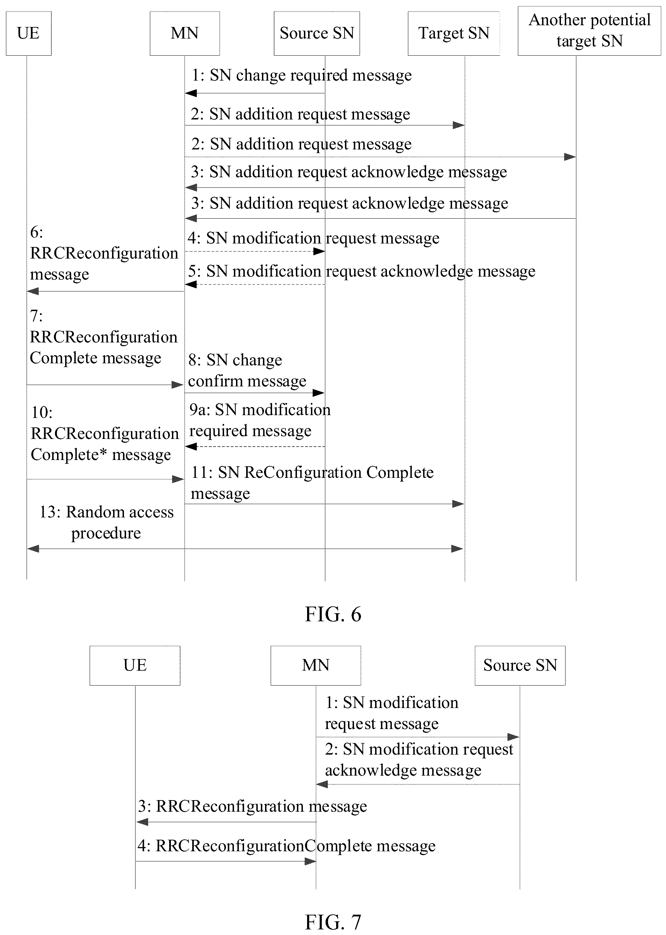

For example, FIG. 6 is a schematic diagram of node interaction in a CPAC configuration method according to an embodiment of this application. The schematic diagram of node interaction shows that first configuration information is configured in a source SN initiated inter-SN CPC process. The process supports subsequent CPAC, including inter-SN CPC between candidate cells of a T-SN. As shown in FIG. 6, the source SN initiated inter-SN CPC process includes the following steps.

Step 1: A source SN sends a third SN message (such as an SN change required message, or a message 1 in FIG. 6) to an MN. Optionally, the third SN message is used to request subsequent CPC, and the third SN message may include first configuration information.

Step 2: The MN sends a fourth SN message (such as an SN addition request, or a message 2 in FIG. 6) to a target SN. Optionally, the fourth SN message is used to request subsequent CPC. The fourth SN message may include a second SN key list, and the second SN key list includes at least one fourth key (that is, an S-NG-RAN node security key).

Step 3: The target SN sends a fifth SN message to the MN (such as an SN addition request acknowledge, or a message 3 in FIG. 6), and the fifth SN message is used to add a candidate cell for CPAC in the target SN. Optionally, the fifth SN message includes the first configuration information. The third SN message may be the SN addition request acknowledge message.

Step 4: The MN sends an RRCReconfiguration message (such as a message 6 in FIG. 6) to UE. The RRCReconfiguration message includes a CPC configuration (that is, target configuration information). The RRCReconfiguration message includes the first configuration information.

It should be noted that for a method for generating the first configuration information, refer to the specific descriptions in the foregoing embodiment. Details are not described herein again in this embodiment of this application.

Step 5: The MN receives a second RRCReconfigurationComplete message (such as a message 7 in FIG. 6) sent by the UE. Optionally, the RRCReconfigurationComplete message may include a third RRCReconfigurationComplete message. The MN sends the third RRCReconfigurationComplete message (such as a message 9a in FIG. 6) to the source SN.

Step 6: The MN sends a second SN message (such as an SN CHANGE CONFIRM message, or a message 8 in FIG. 6) to the source SN, optionally before or after the MN receives the first RRCReconfigurationComplete message sent by the UE.

Scenario 2: CPAC process initiated by the MN

Optionally, in this embodiment of this application, the CPAC process is initiated by the MN. Specifically, before step 501, the CPAC configuration method provided in this embodiment of this application may further include at least one of step 901 and step 902.

Step 901: An MN sends a sixth SN message to a source SN.

Optionally, in this embodiment of this application, the CPC process may be specifically the intra-SN CPC process.

In this embodiment of this application, the sixth SN message is used to request a candidate cell for subsequent CPAC, the sixth SN message includes a third SN key list, the third SN key list corresponds to one first SK-counter list, the third SN key list includes at least one fifth key, and the target PSCell communicates with the UE using the fifth key in the at least one fifth key.

Optionally, in this embodiment of this application, the sixth SN message may be specifically an SN modification request message.

Step 902: The MN receives a seventh SN message from the source SN.

In this embodiment of this application, the seventh SN message includes at least one of the following:
target configuration information;
first configuration information; and
an indication for a candidate cell supporting subsequent CPAC.

Optionally, in this embodiment of this application, the seventh SN message may be specifically an SN modification request acknowledge message.

For example, FIG. 7 is a schematic diagram of node interaction in a CPAC configuration method according to an embodiment of this application. The schematic diagram of node interaction shows that first configuration information is configured in an MN initiated intra-SN CPAC process. The process supports subsequent CPAC, including intra-SN CPAC initiated by an MN in a current SN range. As shown in FIG. 7, the MN initiated intra-SN CPAC process includes the following steps.

Step 1: An MN sends a sixth SN message (such as an SN modification request message, or a message 1 in FIG. 7) to a source SN. The sixth SN message is used to request the source SN to configure a candidate cell for CPAC. Optionally, the sixth SN message includes at least one of an indication for configuring a candidate cell for subsequent CPAC and a third SN key list.

Step 2: The source SN sends a seventh SN message (such as an SN modification request acknowledge, or a message 2 in FIG. 7) to the MN.

Step 3: The MN sends an RRCReconfiguration message (such as a message 3 in FIG. 7) to UE. The RRCReconfiguration message includes a CPC configuration (that is, target configuration information). The RRCReconfiguration message includes first configuration information.

Step 4: The MN receives a second RRCReconfigurationComplete message (such as a message 4 in FIG. 7) sent by the UE. Optionally, the second RRCReconfigurationComplete message includes a third RRCReconfigurationComplete message. The MN sends the third RRCReconfigurationComplete message to the source SN.

Scenario 3: CPAC process initiated by the MN

Optionally, in this embodiment of this application, the CPAC process is initiated by the MN. Before step 501, the CPAC configuration method provided in this embodiment of this application may further include at least one of step 1001 and step 1002.

Step 1001: An MN sends an eighth SN message to a target SN.

In this embodiment of this application, the eighth SN message is used to request a candidate cell for subsequent CPAC, the eighth SN message includes a fourth SN key list, the fourth SN key list corresponds to one first SK-counter list, the fourth SN key list includes at least one sixth key, and the target PSCell communicates with the UE using the sixth key in the at least one sixth key.

Optionally, in this embodiment of this application, the eighth SN message may be specifically an SN addition request message.

Step 1002: The MN receives a ninth SN message from the target SN.

In this embodiment of this application, the ninth SN message includes the first configuration information.

Optionally, in this embodiment of this application, the ninth SN message may be specifically an SN addition request acknowledge message.

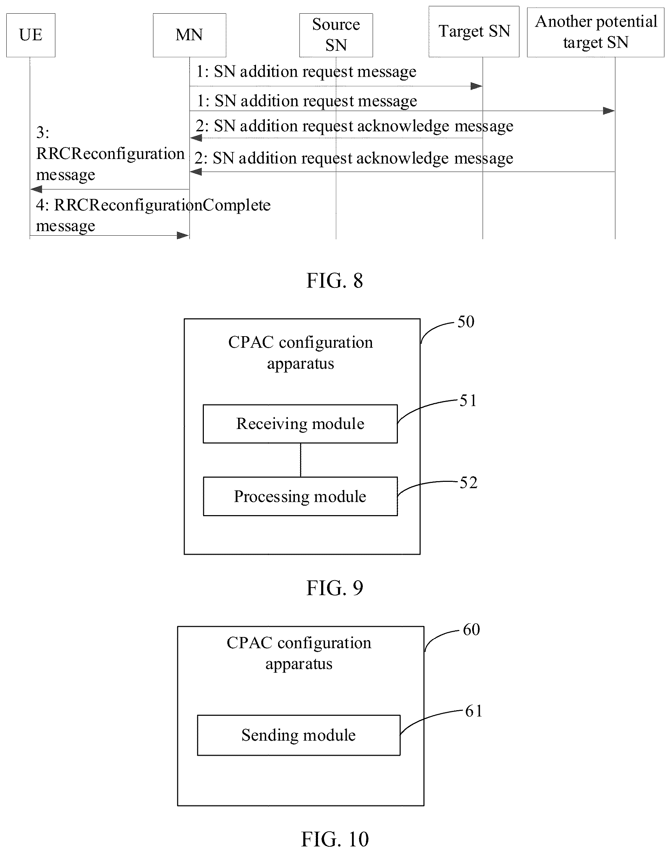

For example, FIG. 8 is a schematic diagram of node interaction in a CPAC configuration method according to an embodiment of this application. The schematic diagram of node interaction shows that first configuration information is configured in an MN initiated inter-SN CPAC process. The process supports subsequent CPAC, including inter-SN CPAC between candidate cells of a target SN. As shown in FIG. 8, MN initiated inter-SN CPAC includes the following steps.

Step 1: An MN sends an eighth SN message (such as an SN addition request, or a message 1 in FIG. 8) to a target SN. Optionally, the eighth SN message is used to request the target SN to configure subsequent CPAC. The eighth SN message includes at least one of an indication for configuring a candidate cell for subsequent CPAC and a fourth key list.

Step 2: The target SN sends a ninth SN message (such as an SN addition request acknowledge, or a message 2 in FIG. 8) to the MN. The ninth SN message is used to add a candidate cell for CPAC in the target SN. The ninth SN message includes the SN addition request acknowledge message.

Step 3: The MN sends an RRCReconfiguration message (such as a message 3 in FIG. 8) to UE. The RRCReconfiguration message includes a CPC configuration (that is, target configuration information). The RRCReconfiguration message includes first configuration information.

Step 4: The MN receives a second RRCReconfigurationComplete message (such as a message 4 in FIG. 8) sent by the UE.

### Scenario 4: intra-SN CPC process and inter-SN CPC process initiated by the source SN

For example, the source SN may simultaneously initiate the intra-SN CPC process and the inter-SN CPC process, and configure first cell deployment information in the process. The process supports subsequent CPC. The intra-SN CPC process and the inter-SN CPC process initiated by the source SN include the following steps: steps 1 and 4 in the intra-SN CPC process initiated by the source SN in FIG. 5, and steps 1 to 3 in the inter-SN CPC process initiated by the source SN in FIG. 7. Then, the MN sends an RRCReconfiguration message to the UE, including cell deployment information of at least one of the source SN and the target SN.

In this way, in a subsequent CPC configuration process, it is convenient to configure intra-SN CPC and inter-SN CPC for the UE through one RRC reconfiguration process, to reduce signaling load.

### Scenario 5: intra-SN CPAC process and inter-SN CPAC process initiated by the MN

For example, the MN may simultaneously initiate the intra-SN CPAC process and the inter-SN CPAC process, and configure first cell deployment information in the process. The process supports subsequent CPC. The intra-SN CPAC process and the inter-SN CPAC process initiated by the MN include the following steps: steps 1 and 2 in the intra-SN CPAC process initiated by the MN in FIG. 7, and steps 1 and 2 in the inter-SN CPAC initiated by the MN in FIG. 8. Then, the MN sends an RRCReconfiguration message to the UE, including cell deployment information of at least one of the source SN and the target SN.

In this way, in a subsequent CPC configuration process, it is convenient to configure intra-SN CPAC and inter-SN CPAC for the UE through one RRC reconfiguration process, to reduce signaling load.

### Scenario 6: inter-SN CPAC process initiated by the MN and intra-SN CPC process initiated by the source SN

For example, when the MN initiates the inter-SN CPAC process, the source SN may also initiate the intra-SN CPC process, and configure first cell deployment information in the process. The process supports subsequent CPC. The inter-SN CPAC process initiated by the MN and the intra-SN CPC process initiated by the source SN include the following steps: steps 1 and 2 in the intra-SN CPC process initiated by the source SN in FIG. 5, and steps 1 and 2 in the inter-SN CPAC process initiated by the MN in FIG. 8. Then, the MN sends an RRCReconfiguration message to the UE, including cell deployment information of at least one of the source SN and the target SN.

In this way, in a subsequent CPC configuration process, it is convenient to configure intra-SN CPC and inter-SN CPAC for the UE through one RRC reconfiguration process, to reduce signaling load.

### Scenario 7: inter-SN CPC process initiated by the source SN and intra-SN CPAC process initiated by the MN

For example, when the source SN initiates the inter-SN CPC process, the MN may also initiate the intra-SN CPAC process, and configure first cell deployment information in the process. The process supports subsequent CPC. The inter-SN CPC process initiated by the source SN and the intra-SN CPAC process initiated by the MN include the following steps: steps 1 to 3 in the inter-SN CPC process initiated by the source SN in FIG. 6, and step 1 and step 2 in the intra-SN CPAC process initiated by the MN in FIG. 7. Then, the MN sends an RRCReconfiguration message to the UE, including cell deployment information of at least one of the source SN and the target SN.

In this way, in a subsequent CPC configuration process, it is convenient to configure intra-SN CPC and inter-SN CPC for the UE through one RRC reconfiguration process, to reduce signaling load.

The CPAC configuration method provided in the embodiments of this application may be performed by a CPAC configuration apparatus. In the embodiments of this application, an example in which the CPAC configuration apparatus performs the CPAC configuration method is used to describe the CPAC configuration apparatus provided in the embodiments of this application.

FIG. 9 is a schematic diagram of a possible structure of a CPAC configuration apparatus according to an embodiment of this application. As shown in FIG. 9, the CPAC configuration apparatus 50 provided in this embodiment of this application may include a receiving module 51 and a processing module 52.

The receiving module 51 is configured to receive target configuration information sent by a network side device, where the target configuration information is used to configure at least one first candidate cell for subsequent CPAC, and the at least one first candidate cell is available for an intra-SN CPC process and an inter-SN CPC process. The processing module 52 is configured to perform a first operation to change from a source PSCell to a target PSCell, where the first operation includes at least one of the following: the intra-SN CPC process and the inter-SN CPC process, and the target PSCell is the first candidate cell of the at least one first candidate cell.

In a possible implementation, the CPAC configuration apparatus 50 provided in this embodiment of this application may further include an obtaining module. The obtaining module is configured to obtain first configuration information. The processing module 52 is specifically configured to perform the first operation according to the first configuration information.

In a possible implementation, the obtaining module is specifically configured to perform any one of the following: receiving the first configuration information from the network side device; and receiving intra-SN CPC configuration information from the network side device, and determining the first configuration information according to the intra-SN CPC configuration information.

In a possible implementation, the first configuration information includes at least one of the followings: at least one first SK-counter list; first indication information; at least one first cell list; and first cell deployment information, where each first SK-counter list includes at least one SK-counter; the first indication information is used to indicate whether to use an SK-counter in the first SK-counter list in a process of performing the first operation; each first cell list includes identification information of at least one first cell, and an SN key needs to be updated or an SN key does not need to be updated for PSCell change between first cells whose identification information is in a same first cell list; and the first cell deployment information is used to indicate a change type for PSCell change to the first candidate cell, and the change type includes any one of the following: intra-SN CPC and inter-SN CPC.

In a possible implementation, each first SK-counter list is associated with at least one of the following: one SN; one first candidate cell set; and one first candidate cell, where a candidate cell in one first candidate cell set is associated with one first SK-counter list.

In a possible implementation, the first cell deployment information includes at least one of the followings: at least one first candidate cell list; at least one second candidate cell set; at least one piece of second indication information; and at least one piece of third indication information, where each first candidate cell list includes identification information of the first candidate cell belonging to a same SN in the at least one first candidate cell; each second candidate cell set corresponds to one first candidate cell, and each second candidate cell set includes identification information of the first candidate cell belonging to a same SN as the corresponding first candidate cell of the at least one first candidate cell; each piece of second indication information corresponds to one first candidate cell, and each piece of second indication information is used to indicate at least one of the following: whether the corresponding first candidate cell and the source PSCell belong to a same SN, and the change type for change from the source PSCell to the corresponding first candidate cell; and each piece of third indication information corresponds to one first candidate cell, each piece of third indication information is used to indicate a node identifier of an SN to which the corresponding first candidate cell belongs, and different SNs have different node identifiers.

In a possible implementation, the identification information includes at least one of the followings: a permanent cell identifier; a temporary cell identifier; and a conditional reconfiguration identifier, where the temporary cell identifier is used to distinguish the first candidate cell, and different first candidate cells have different temporary cell identifiers.

In a possible implementation, the first configuration information includes the at least one first SK-counter list, and the first operation includes the intra-SN CPC process. The processing module 52 is further configured to skip updating a first SN key using an SK-counter in the at least one first SK-counter list 52, where the source PSCell communicates with the CPAC configuration apparatus 50 using the first SN key.

In a possible implementation, the first configuration information includes the at least one first SK-counter list, and the first operation includes the inter-SN CPC process. The processing module 52 is further configured to perform a second operation, and use a first SK-counter, where the second operation includes any one of the following: removing the first SK-counter from a second SK-counter list; and adding a first marker to the first SK-counter in the second SK-counter list, where the second SK-counter list is the first SK-counter list corresponding to the target PSCell in the at least one first SK-counter list; and the first marker is used to mark an SK-counter that is not used or has been used by the CPAC configuration apparatus 50.

In a possible implementation, the first configuration information includes the at least one first SK-counter list, and the first operation includes the intra-SN CPC process. The CPAC configuration apparatus 50 provided in this embodiment of this application may further include a sending module. The sending module is configured to send a first RRCReconfigurationComplete message to the target PSCell, where the first RRCReconfigurationComplete message includes fourth indication information, and the fourth indication information is used to indicate at least one of the following: a first change type for change from the source PSCell to the target PSCell; whether a second SN key has been used; and whether a first SK-counter has been used, where the first change type includes intra-SN CPC; and the second SN key is different from a first SN key, and the source PSCell communicates with the CPAC configuration apparatus 50 using the first SN key.

In a possible implementation, the first configuration information includes the at least one first SK-counter list, and the first operation includes the inter-SN CPC process. The CPAC configuration apparatus 50 provided in this embodiment of this application may further include a sending module. The sending module is configured to send a second RRCReconfigurationComplete message to the network side device, where the second RRCReconfigurationComplete message includes at least one of the following: fifth indication information; and a third RRCReconfigurationComplete message, where the fifth indication information is used to indicate at least one of the following: a second change type for change from the source PSCell to the target PSCell; whether a second SN key has been used; and whether a first SK-counter has been used, where the second change type includes inter-SN CPC; the second SN key is different from a first SN key, and the source PSCell communicates with the CPAC configuration apparatus 50 using the first SN key; and the third RRCReconfigurationComplete message includes the fifth indication information.

According to the CPAC configuration apparatus provided in this embodiment of this application, because the at least one first candidate cell configured by the network side device is available for the intra-SN CPC process and the inter-SN CPC process, this can avoid a case that the at least one first candidate cell includes an overlapping candidate cell, that is, can reduce a quantity of first candidate cells of the at least one first candidate cell. Therefore, in a case of a limited quantity of configurable candidate cells, the network side device can provide conditional handover configuration for more different candidate cells. In this way, coverage performance of subsequent CPAC can be improved.

The CPAC configuration apparatus in this embodiment of this application may be an electronic device, for example, an electronic device having an operating system, or may be a component in the electronic device, for example, an integrated circuit or a chip. The electronic device may be a terminal, or another device other than the terminal. For example, the terminal may include but is not limited to the foregoing listed types of the terminal 11. The another device may be a server, a network attached storage (Network Attached Storage, NAS), or the like. This is not specifically limited in this embodiment of this application.

The CPAC configuration apparatus in this embodiment of this application can implement the processes implemented in the method embodiments in FIG. 1 to FIG. 3, and can achieve a same technical effect. To avoid repetition, details are not described herein again.

FIG. 10 is a schematic diagram of a possible structure of a CPAC configuration apparatus according to an embodiment of this application. As shown in FIG. 10, the CPAC configuration apparatus 60 provided in this embodiment of this application may include a sending module 61.

The sending module 61 is configured to send target configuration information to UE, where the target configuration information is used to configure at least one first candidate cell for subsequent CPAC, and the at least one first candidate cell is available for an intra-SN CPC process and an inter-SN CPC process; the at least one first candidate cell is used by the UE to perform a first operation to change from a source PSCell to a target PSCell; and the first operation includes at least one of the following: the intra-SN CPC process and the inter-SN CPC process, and the target PSCell is the first candidate cell of the at least one first candidate cell.

In a possible implementation, the sending module 61 is further configured to send first configuration information to the UE, where the first configuration information includes at least one of the following: at least one first SK-counter list; first indication information; at least one first cell list; and first cell deployment information, where each first SK-counter list includes at least one SK-counter; the first indication information is used to indicate whether to use an SK-counter in the first SK-counter list in a process of performing the first operation; each first cell list includes identification information of at least one first cell, and an SN key needs to be updated or an SN key does not need to be updated for PSCell change between first cells whose identification information is in a same first cell list; and the first cell deployment information is used to indicate a change type for PSCell change to the first candidate cell, and the change type includes any one of the following: intra-SN CPC and inter-SN CPC.

In a possible implementation, each first SK-counter list is associated with at least one of the following: one SN; one first candidate cell set; and one first candidate cell, where a candidate cell in one first candidate cell set is associated with one first SK-counter list.

In a possible implementation, the first cell deployment information includes at least one of the followings: at least one first candidate cell list; at least one second candidate cell set; at least one piece of second indication information; and at least one piece of third indication information, where each first candidate cell list includes identification information of the first candidate cell belonging to a same SN in the at least one first candidate cell; each second candidate cell set corresponds to one first candidate cell, and each second candidate cell set includes identification information of the first candidate cell belonging to a same SN as the corresponding first candidate cell of the at least one first candidate cell; each piece of second indication information corresponds to one first candidate cell, and each piece of second indication information is used to indicate at least one of the following: whether the corresponding first candidate cell and the source PSCell belong to a same SN, and the change type for change from the source PSCell to the corresponding first candidate cell; and each piece of third indication information corresponds to one first candidate cell, each piece of third indication information is used to indicate a node identifier of an SN to which the corresponding first candidate cell belongs, and different SNs have different node identifiers.

In a possible implementation, the identification information includes at least one of the followings: a permanent cell identifier; a temporary cell identifier; and a conditional reconfiguration identifier, where the temporary cell identifier is used to distinguish the first candidate cell, and different first candidate cells have different temporary cell identifiers.

In a possible implementation, a CPC process is initiated by a source SN; and the CPAC configuration apparatus 60 provided in this embodiment of this application may further include a receiving module. The receiving module is configured to receive a first SN message from the source SN, where the first SN message includes the first configuration information.

In a possible implementation, the first configuration information includes the at least one first SK-counter list. The sending module 61 is further configured to send a second SN message to the source SN, where the second SN message includes a first SN key list, the first SN key list corresponds to one first SK-counter list, the first SN key list includes at least one third key, and the target PSCell communicates with the UE using the third SN key in the at least one third SN key.

In a possible implementation, the first configuration information includes the at least one first SK-counter list. The receiving module is further configured to receive a fourth RRCReconfigurationComplete message from the UE, where the fourth RRCReconfigurationComplete message includes sixth indication information. The sending module 61 is further configured to send the sixth indication information to the source SN, where the sixth indication information is used to indicate at least one of the following: a change type for change from the source PSCell to the target PSCell; whether a second SN key has been used; and whether a first SK-counter has been used, where the change type includes any one of the following: intra-SN CPC and inter-SN CPC; and the second SN key is different from a first SN key, and the source PSCell communicates with the UE using the first SN key.

In a possible implementation, a CPC process is initiated by a source SN. The CPAC configuration apparatus 60 provided in this embodiment of this application further includes a receiving module. The modules of the CPAC configuration apparatus 60 are further configured to perform at least one of the following: the receiving module is configured to receive a third SN message from the source SN, where the third SN message is used to request to configure subsequent CPAC; the sending module 61 is further configured to send a fourth SN message to a target SN, where the fourth SN message is used to request a candidate cell for subsequent CPAC, the fourth SN message includes a second SN key list, the second SN key list corresponds to one first SK-counter list, the second SN key list includes at least one fourth key, and the target PSCell communicates with the UE using the fourth key in the at least one fourth key; and the receiving module is further configured to receive a fifth SN message from the target SN, where the fifth SN message includes the first configuration information.

In a possible implementation, a CPAC process is initiated by the CPAC configuration apparatus 60. The CPAC configuration apparatus 60 provided in this embodiment of this application may further include a receiving module. The modules of the CPAC configuration apparatus 60 are further configured to perform at least one of the following: the sending module 61 is further configured to send a sixth SN message to a source SN, where the sixth SN message is used to request a candidate cell for subsequent CPAC, the sixth SN message includes a third SN key list, the third SN key list corresponds to one first SK-counter list, the third SN key list includes at least one fifth key, and the target PSCell communicates with the UE using the fifth key in the at least one fifth key; and the receiving module is configured to receive a seventh SN message from the source SN, where the seventh SN message includes at least one of the following: the target configuration information; the first configuration information; and an indication for a candidate cell supporting subsequent CPAC.

In a possible implementation, a CPAC process is initiated by the CPAC configuration apparatus 60. The CPAC configuration apparatus 60 provided in this embodiment of this application may further include a receiving module. The modules of the CPAC configuration apparatus 60 are further configured to perform at least one of the following: the sending module 61 is further configured to send an eighth SN message to a target SN, where the eighth SN message is used to request a candidate cell for subsequent CPAC, the eighth SN message includes a fourth SN key list, the fourth SN key list corresponds to one first SK-counter list, the fourth SN key list includes at least one sixth key, and the target PSCell communicates with the UE using the sixth key in the at least one sixth key; and the receiving module is further configured to receive a ninth SN message from the target SN, where the ninth SN message includes the first configuration information.

In a possible implementation, the first configuration information includes the at least one first SK-counter list. The CPAC configuration apparatus 60 provided in this embodiment of this application may further include a receiving module. The receiving module is configured to receive a second RRCReconfigurationComplete message from the UE, where the second RRCReconfigurationComplete message includes at least one of the following: fifth indication information; and a third RRCReconfigurationComplete message, where the fifth indication information is used to indicate at least one of the following: a change type for change from the source PSCell to the target PSCell; whether a second SN key has been used; and whether a first SK-counter has been used, where the change type includes any one of the following: intra-SN CPC and inter-SN CPC; the second SN key is different from a first SN key, and the source PSCell communicates with the UE using the first SN key; and the third RRCReconfigurationComplete message includes the fifth indication information.

In a possible implementation, the first configuration information includes the first cell deployment information. The CPAC configuration apparatus 60 provided in this embodiment of this application may further include a receiving module and a processing module. The receiving module is configured to receive second cell deployment information, where the second cell deployment information is used to indicate the change type for PSCell change to the first candidate cell, and an information format of the second cell deployment information is different from that of the first cell deployment information. The processing module is configured to convert the second cell deployment information received by the receiving module into the first cell deployment information.

In a possible implementation, the first configuration information includes the first cell deployment information. The CPAC configuration apparatus 60 provided in this embodiment of this application may further include a receiving module and a processing module. The receiving module is configured to receive the target configuration information. The processing module is configured to generate the first cell deployment information according to the target configuration information received by the receiving module.

According to the CPAC configuration method provided in this embodiment of this application, because the at least one first candidate cell configured by the CPAC configuration apparatus is available for the intra-SN CPC process and the inter-SN CPC process, this can avoid a case that the at least one first candidate cell includes an overlapping candidate cell, that is, can reduce a quantity of first candidate cells of the at least one first candidate cell. Therefore, in a case of a limited quantity of configurable candidate cells, the network side device can provide conditional handover configuration for more different candidate cells. In this way, coverage performance of subsequent CPAC can be improved.

The CPAC configuration apparatus in this embodiment of this application may be an electronic device, for example, an electronic device having an operating system, or may be a component in the electronic device, for example, an integrated circuit or a chip. The electronic device may be a terminal, or another device other than the terminal. For example, the terminal may include but is not limited to the foregoing listed types of the terminal 11, and the another device may be a server, a network attached storage (Network Attached Storage, NAS), or the like. This is not specifically limited in this embodiment of this application.

The CPAC configuration apparatus in this embodiment of this application can implement the processes implemented in the method embodiments in FIG. 4 to FIG. 8, and can achieve a same technical effect. To avoid repetition, details are not described herein again.

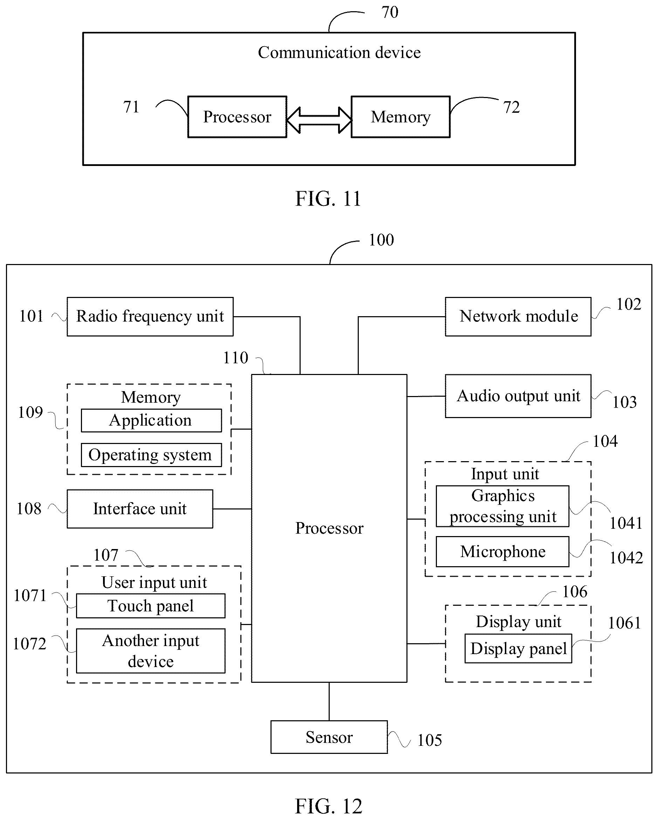

As shown in FIG. 11, an embodiment of this application further provides a communication device 70, including a processor 71 and a memory 72. The memory 72 stores a program or an instruction that is executable on the processor 71. For example, in a case that the communications device 70 is a terminal, the program or the instruction is executed by the processor 71 to implement the steps of the embodiment of the CPAC configuration method, and a same technical effect can be achieved. In a case that the communication device m00 is a network side device, the program or the instruction is executed by the processor m01 to implement the steps of the embodiment of the CPAC configuration method, and a same technical effect can be achieved. To avoid repetition, details are not described herein again.

An embodiment of this application further provides a terminal, including a processor and a communication interface. The communication interface is coupled to the processor, and the processor is configured to run a program or an instruction to implement the steps in the method embodiment shown in FIG. 2. The terminal embodiment is corresponding to the method embodiment on the terminal side, each implementation process and implementation of the method embodiment can be applied to the terminal embodiment, and a same technical effect can be achieved. Specifically, FIG. 12 is a schematic diagram of a hardware structure of a terminal according to an embodiment of this application.

The terminal 100 includes but is not limited to at least a part of components such as a radio frequency unit 101, a network module 102, an audio output unit 103, an input unit 104, a sensor 105, a display unit 106, a user input unit 107, an interface unit 108, a memory 109, and a processor 110.

A person skilled in the art can understand that the terminal 100 may further include a power supply (such as a battery) that supplies power to each component. The power supply may be logically connected to the processor 110 by using a power supply management system, to implement functions such as charging and discharging management, and power consumption management by using the power supply management system. The terminal structure shown in FIG. 12 constitutes no limitation on the terminal, and the terminal may include more or fewer components than those shown in the figure, or combine some components, or have different component arrangements. Details are not described herein.

It should be understood that in this embodiment of this application, the input unit 104 may include a graphics processing unit (Graphics Processing Unit, GPU) 1041 and a microphone 1042. The graphics processing unit 1041 processes image data of a static picture or a video obtained by an image capture apparatus (for example, a camera) in a video capture mode or an image capture mode. The display unit 106 may include a display panel 1061, and the display panel 1061 may be configured in a form of a liquid crystal display, an organic light-emitting diode, or the like. The user input unit 107 includes at least one of a touch panel 1071 and another input device 1072. The touch panel 1071 is also referred to as a touchscreen. The touch panel 1071 may include two parts: a touch detection apparatus and a touch controller. The another input device 1072 may include but is not limited to a physical keyboard, a functional button (such as a volume control button or a power on/off button), a trackball, a mouse, and a joystick. Details are not described herein.

In this embodiment of this application, after receiving downlink data from a network side device, the radio frequency unit 101 may transmit the downlink data to the processor 110 for processing. In addition, the radio frequency unit 101 may send uplink data to the network side device. Generally, the radio frequency unit 101 includes but is not limited to an antenna, an amplifier, a transceiver, a coupler, a low noise amplifier, a duplexer, and the like.

The memory 109 may be configured to store a software program or an instruction and various data. The memory 109 may mainly include a first storage area for storing a program or an instruction and a second storage area for storing data. The first storage area may store an operating system, and an application or an instruction required by at least one function (for example, a sound playing function or an image playing function). In addition, the memory 109 may include a volatile memory or a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synch link dynamic random access memory (Synch link DRAM, SLDRAM), and a direct rambus random access memory (Direct Rambus RAM, DRRAM). The memory 109 in this embodiment of this application includes but is not limited to these memories and any memory of another proper type.

The processor 110 may include one or more processing units. Optionally, an application processor and a modem processor are integrated into the processor 110. The application processor mainly processes an operating system, a user interface, an application, or the like. The modem processor mainly processes a wireless communication signal, for example, a baseband processor. It may be understood that, alternatively, the modem processor may not be integrated into the processor 110.

The radio frequency unit 101 is configured to receive target configuration information sent by a network side device, where the target configuration information is used to configure at least one first candidate cell for subsequent CPAC, and the at least one first candidate cell is available for an intra-SN CPC process and an inter-SN CPC process.

The processor 110 is configured to perform a first operation to change from a source PSCell to a target PSCell, where
the first operation includes at least one of the following: the intra-SN CPC process and the inter-SN CPC process, and the target PSCell is the first candidate cell of the at least one first candidate cell.

According to the terminal provided in this embodiment of this application, because the at least one first candidate cell configured by the network side device is available for the intra-SN CPC process and the inter-SN CPC process, this can avoid a case that the at least one first candidate cell includes an overlapping candidate cell, that is, can reduce a quantity of first candidate cells of the at least one first candidate cell. Therefore, in a case of a limited quantity of configurable candidate cells, the network side device can provide conditional handover configuration for more different candidate cells. In this way, coverage performance of subsequent CPAC can be improved.

Optionally, in this embodiment of this application, the radio frequency unit 101 is further configured to obtain first configuration information.

The processor 110 is specifically configured to perform the first operation according to the first configuration information.

Optionally, in this embodiment of this application, the radio frequency unit 101 is specifically configured to perform at least one of the following:
receiving the first configuration information from the network side device; and
receiving intra-SN CPC configuration information from the network side device, and determining the first configuration information according to the intra-SN CPC configuration information.

Optionally, in this embodiment of this application, the first configuration information includes the at least one first SK-counter list, and the first operation includes the intra-SN CPC process.

The processor 110 is further configured to skip updating a first SN key using an SK-counter in the at least one first SK-counter list, where the source PSCell communicates with the terminal using the first SN key.

Optionally, in this embodiment of this application, the first configuration information includes the at least one first SK-counter list, and the first operation includes the inter-SN CPC process.

The processor 110 is further configured to perform a second operation, and use a first SK-counter, where
the second operation includes any one of the following: removing the first SK-counter from a second SK-counter list; and adding a first marker to the first SK-counter in the second SK-counter list, where the second SK-counter list is the first SK-counter list corresponding to the target PSCell in the at least one first SK-counter list; and the first marker is used to mark an SK-counter that is not used or has been used by the terminal.

Optionally, in this embodiment of this application, the first configuration information includes the at least one first SK-counter list, and the first operation includes the intra-SN CPC process.

The radio frequency unit 101 is further configured to send a first RRCReconfigurationComplete message to the target PSCell, where the first RRCReconfigurationComplete message includes fourth indication information, and the fourth indication information is used to indicate at least one of the following: a first change type for change from the source PSCell to the target PSCell; whether a second SN key has been used; and whether a first SK-counter has been used, where
the first change type includes intra-SN CPC; and the second SN key is different from a first SN key, and the source PSCell communicates with the terminal using the first SN key.

Optionally, in this embodiment of this application, the first configuration information includes the at least one first SK-counter list, and the first operation includes the inter-SN CPC process.

The radio frequency unit 101 is further configured to send a second RRCReconfigurationComplete message to the network side device, where the second RRCReconfigurationComplete message includes at least one of the following: fifth indication information; and a third RRCReconfigurationComplete message, where the fifth indication information is used to indicate at least one of the following: a second change type for change from the source PSCell to the target PSCell; whether a second SN key has been used; and whether a first SK-counter has been used, where
the second change type includes inter-SN CPC; the second SN key is different from a first SN key, and the source PSCell communicates with the terminal using the first SN key; and the third RRCReconfigurationComplete message includes the fifth indication information.

It may be understood that for the implementation process of each implementation mentioned in this embodiment, refer to the related descriptions in the embodiment of the CPAC configuration method corresponding to the UE. A same or corresponding technical effect is achieved. To avoid repetition, details are not described herein again.

An embodiment of this application further provides a network side device, including a processor and a communication interface. The communication interface is coupled to the processor, and the processor is configured to run a program or an instruction to implement the steps in the method embodiment shown in FIG. 4. This network side device embodiment is corresponding to the foregoing method embodiment of the network side device. Each implementation process and implementation of the foregoing method embodiment may be applicable to this network side device embodiment, and a same technical effect can be achieved.

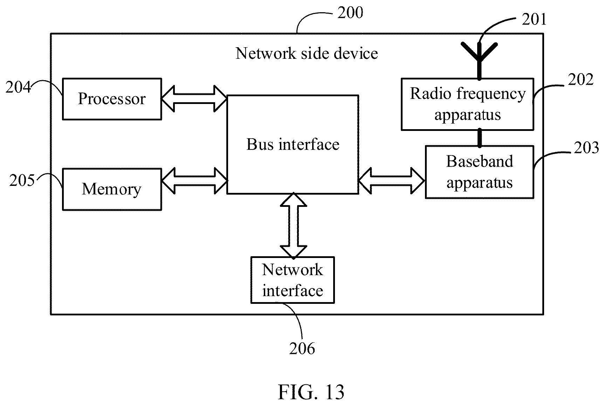

Specifically, an embodiment of this application further provides a network side device. As shown in FIG. 13, the network side device 200 includes an antenna 201, a radio frequency apparatus 202, a baseband apparatus 203, a processor 204, and a memory 205. The antenna 201 is connected to the radio frequency apparatus 202. In an uplink direction, the radio frequency apparatus 202 receives information through the antenna 201, and sends the received information to the baseband apparatus 203 for processing. In a downlink direction, the baseband apparatus 203 processes information that needs to be sent, and sends processed information to the radio frequency apparatus 202. The radio frequency apparatus 202 processes the received information, and sends processed information through the antenna 201.

In the foregoing embodiment, the method performed by the network side device may be implemented in the baseband apparatus 203. The baseband apparatus 203 includes a baseband processor.

For example, the baseband apparatus 203 may include at least one baseband board. Multiple chips are disposed on the baseband board. As shown in FIG. 13, one chip is, for example, a baseband processor, and is connected to the memory 205 by using a bus interface, to invoke a program in the memory 205 to perform the operations of the network device shown in the foregoing method embodiment.

The network side device may further include a network interface 206, and the interface is, for example, a common public radio interface (Common Public Radio Interface, CPRI).

Specifically, the network side device 200 in this embodiment of the present invention further includes an instruction or a program that is stored in the memory 205 and that is executable on the processor 204. The processor 204 invokes the instruction or the program in the memory 205 to perform the method performed by the modules shown in FIG. 10, and a same technical effect is achieved. To avoid repetition, details are not described herein again.

An embodiment of this application further provides a readable storage medium. The readable storage medium stores a program or an instruction. The program or the instruction is executed by a processor to implement the processes of the foregoing embodiment of the CPAC configuration method, and a same technical effect can be achieved. To avoid repetition, details are not described herein again.

The processor is a processor in the terminal in the foregoing embodiments. The readable storage medium includes a computer-readable storage medium, such as a computer read-only memory ROM, a random access memory RAM, a magnetic disk, or an optical disc. In some examples, the readable storage medium may be a non-transitory readable storage medium.

An embodiment of this application further provides a chip. The chip includes a processor and a communication interface, the communication interface is coupled to the processor, and the processor is configured to run a program or an instruction to implement the processes of the foregoing embodiment of the CPAC configuration method, and a same technical effect can be achieved. To avoid repetition, details are not described herein again.

It should be understood that the chip mentioned in this embodiment of this application may also be referred to as a system-level chip, a system chip, a chip system, or a system on chip.

An embodiment of this application further provides a computer program/program product. The computer program/program product is stored in a storage medium, and the program/program product is executed by at least one processor to implement the processes of the foregoing embodiment of the CPAC configuration method, and a same technical effect can be achieved. To avoid repetition, details are not described herein again.

An embodiment of this application further provides a CPAC configuration system, including a terminal and a network side device. The terminal may be configured to perform the steps of the CPAC configuration method corresponding to the UE, and the network side device may be configured to perform the steps of the CPAC configuration method corresponding to the MN.

It should be noted that, in this specification, the term "include", "comprise", or any other variant thereof is intended to cover a non-exclusive inclusion, so that a process, a method, an article, or an apparatus that includes a list of elements not only includes those elements but also includes other elements which are not expressly listed, or further includes elements inherent to this process, method, article, or apparatus. In absence of more constraints, an element preceded by "includes a..." does not preclude the existence of other identical elements in the process, method, article, or apparatus that includes the element. In addition, it should be noted that the scope of the method and apparatuses in the embodiments of this application is not limited to performing functions in the order shown or discussed, but may also include performing the functions in a basically simultaneous manner or in opposite order based on the functions involved. For example, the described method may be performed in a different order from the described order, and various steps may be added, omitted, or combined. In addition, features described with reference to some examples may be combined in other examples.

Based on the descriptions of the foregoing implementations, a person skilled in the art may clearly understand that the method in the foregoing embodiment may be implemented by a computer software product in addition to a necessary universal hardware platform or by hardware only. The computer software product is stored in a storage medium (such as a ROM, a RAM, a magnetic disk, or an optical disc), and includes several instructions for instructing a terminal or a network side device to perform the methods in the embodiments of this application.

The embodiments of this application are described above with reference to the accompanying drawings, but this application is not limited to the foregoing specific implementations, and the foregoing specific implementations are only illustrative and not restrictive. Under the enlightenment of this application, a person of ordinary skill in the art can make implementations in many forms without departing from the purpose of this application and the protection scope of the claims, the implementations fall within the protection of this application.

## Claims

1. A conditional primary secondary cell addition or change CPAC configuration method, comprising:
receiving, by user equipment UE, target configuration information sent by a network side device, wherein the target configuration information is used to configure at least one first candidate cell for subsequent CPAC, and the at least one first candidate cell is available for an intra secondary node conditional primary secondary cell change intra-SN CPC process and an inter secondary node conditional primary secondary cell change inter-SN CPC process; and
performing, by the UE, a first operation to change from a source primary secondary cell PSCell to a target PSCell, wherein
the first operation comprises at least one of the following: the intra-SN CPC process and the inter-SN CPC process, and the target PSCell is the first candidate cell of the at least one first candidate cell.

2. The method according to claim 1, before the performing, by the UE, a first operation, the method further comprises:
obtaining, by the UE, first configuration information; and
the performing, by the UE, a first operation comprises:
performing, by the UE, the first operation according to the first configuration information.

3. The method according to claim 2, wherein the obtaining, by the UE, first configuration information comprises any one of the following:
receiving, by the UE, the first configuration information from the network side device; and
receiving, by the UE, intra-SN CPC configuration information from the network side device, and determining the first configuration information according to the intra-SN CPC configuration information.

4. The method according to claim 2, wherein the first configuration information comprises at least one of the following:
at least one first secondary node key counter list SK-counter list;
first indication information;
at least one first cell list; and
first cell deployment information, wherein
each first SK-counter list comprises at least one SK-counter;
the first indication information is used to indicate whether to use an SK-counter in the first SK-counter list in a process of performing the first operation;
each first cell list comprises identification information of at least one first cell, and an SN key needs to be updated or an SN key does not need to be updated for PSCell change between first cells whose identification information is in a same first cell list; and
the first cell deployment information is used to indicate a change type for PSCell change to the first candidate cell, and the change type comprises any one of the following: intra-SN CPC and inter-SN CPC.

5. The method according to claim 4, wherein each first SK-counter list is associated with at least one of the following:
one SN;
one first candidate cell set; and
one first candidate cell, wherein
a candidate cell in one first candidate cell set is associated with one first SK-counter list.

6. The method according to claim 4, wherein the first cell deployment information comprises at least one of the following:
at least one first candidate cell list;
at least one second candidate cell set;
at least one piece of second indication information; and
at least one piece of third indication information, wherein
each first candidate cell list comprises identification information of the first candidate cell belonging to a same SN in the at least one first candidate cell;
each second candidate cell set corresponds to one first candidate cell, and each second candidate cell set comprises identification information of the first candidate cell belonging to a same SN as the corresponding first candidate cell of the at least one first candidate cell;
each piece of second indication information corresponds to one first candidate cell, and each piece of second indication information is used to indicate at least one of the following: whether the corresponding first candidate cell and the source PSCell belong to a same SN, and the change type for change from the source PSCell to the corresponding first candidate cell; and
each piece of third indication information corresponds to one first candidate cell, each piece of third indication information is used to indicate a node identifier of an SN to which the corresponding first candidate cell belongs, and different SNs have different node identifiers.

7. The method according to claim 6, wherein the identification information comprises at least one of the following:
a permanent cell identifier;
a temporary cell identifier; and
a conditional reconfiguration identifier, wherein
the temporary cell identifier is used to distinguish the first candidate cell, and different first candidate cells have different temporary cell identifiers.

8. The method according to claim 4, wherein the first configuration information comprises the at least one first SK-counter list, the first operation comprises the intra-SN CPC process, and the method further comprises:
skipping, by the UE, updating a first SN key using an SK-counter in the at least one first SK-counter list, wherein the source PSCell communicates with the UE using the first SN key.

9. The method according to claim 4, wherein the first configuration information comprises the at least one first SK-counter list, the first operation comprises the inter-SN CPC process, and the method further comprises:
performing, by the UE, a second operation, and using a first SK-counter, wherein
the second operation comprises any one of the following:
removing the first SK-counter from a second SK-counter list; and
adding a first marker to the first SK-counter in the second SK-counter list, wherein
the second SK-counter list is the first SK-counter list corresponding to the target PSCell in the at least one first SK-counter list; and
the first marker is used to mark an SK-counter that is not used or has been used by the UE.

10. The method according to claim 4, wherein the first configuration information comprises the at least one first SK-counter list, the first operation comprises the intra-SN CPC process, and the method further comprises:
sending, by the UE, a first radio resource control reconfiguration complete RRCReconfigurationComplete message to the target PSCell, wherein the first RRCReconfigurationComplete message comprises fourth indication information, and
the fourth indication information is used to indicate at least one of the following:
a first change type for change from the source PSCell to the target PSCell;
whether a second SN key has been used; and
whether a first SK-counter has been used, wherein
the first change type comprises intra-SN CPC; and
the second SN key is different from a first SN key, and the source PSCell communicates with the UE using the first SN key.

11. The method according to claim 4, wherein the first configuration information comprises the at least one first SK-counter list, the first operation comprises the inter-SN CPC process, and the method further comprises:
sending, by the UE, a second RRCReconfigurationComplete message to the network side device, wherein
the second RRCReconfigurationComplete message comprises at least one of the following:
fifth indication information; and
a third RRCReconfigurationComplete message, wherein
the fifth indication information is used to indicate at least one of the following:
a second change type for change from the source PSCell to the target PSCell;
whether a second SN key has been used; and
whether a first SK-counter has been used, wherein
the second change type comprises inter-SN CPC;
the second SN key is different from a first SN key, and the source PSCell communicates with the UE using the first SN key; and
the third RRCReconfigurationComplete message comprises the fifth indication information.

12. A CPAC configuration method, comprising:
sending, by a master node MN, target configuration information to UE, wherein the target configuration information is used to configure at least one first candidate cell for subsequent CPAC, and the at least one first candidate cell is available for an intra-SN CPC process and an inter-SN CPC process;
the at least one first candidate cell is used by the UE to perform a first operation to change from a source PSCell to a target PSCell; and
the first operation comprises at least one of the following: the intra-SN CPC process and the inter-SN CPC process, and the target PSCell is the first candidate cell of the at least one first candidate cell.

13. The method according to claim 12, wherein the method further comprises:
sending, by the MN, first configuration information to the UE, wherein
the first configuration information comprises at least one of the following:
at least one first SK-counter list;
first indication information;
at least one first cell list; and
first cell deployment information, wherein
each first SK-counter list comprises at least one SK-counter;
the first indication information is used to indicate whether to use an SK-counter in the first SK-counter list in a process of performing the first operation;
each first cell list comprises identification information of at least one first cell, and an SN key needs to be updated or an SN key does not need to be updated for PSCell change between first cells whose identification information is in a same first cell list; and
the first cell deployment information is used to indicate a change type for PSCell change to the first candidate cell, and the change type comprises any one of the following: intra-SN CPC and inter-SN CPC.

14. The method according to claim 13, wherein each first SK-counter list is associated with at least one of the following:
one SN;
one first candidate cell set; and
one first candidate cell, wherein
a candidate cell in one first candidate cell set is associated with one first SK-counter list.

15. The method according to claim 13, wherein the first cell deployment information comprises at least one of the following:
at least one first candidate cell list;
at least one second candidate cell set;
at least one piece of second indication information; and
at least one piece of third indication information, wherein
each first candidate cell list comprises identification information of the first candidate cell belonging to a same SN in the at least one first candidate cell;
each second candidate cell set corresponds to one first candidate cell, and each second candidate cell set comprises identification information of the first candidate cell belonging to a same SN as the corresponding first candidate cell of the at least one first candidate cell;
each piece of second indication information corresponds to one first candidate cell, and each piece of second indication information is used to indicate at least one of the following: whether the corresponding first candidate cell and the source PSCell belong to a same SN, and the change type for change from the source PSCell to the corresponding first candidate cell; and
each piece of third indication information corresponds to one first candidate cell, each piece of third indication information is used to indicate a node identifier of an SN to which the corresponding first candidate cell belongs, and different SNs have different node identifiers.

16. The method according to claim 15, wherein the identification information comprises at least one of the following:
a permanent cell identifier;
a temporary cell identifier; and
a conditional reconfiguration identifier, wherein
the temporary cell identifier is used to distinguish the first candidate cell, and different first candidate cells have different temporary cell identifiers.

17. The method according to claim 13, wherein a CPC process is initiated by a source SN, and the method further comprises:
receiving, by the MN, a first SN message from the source SN, wherein the first SN message comprises the first configuration information.

18. The method according to claim 17, wherein the first configuration information comprises the at least one first SK-counter list, and the method further comprises:
sending, by the MN, a second SN message to the source SN, wherein
the second SN message comprises a first SN key list, the first SN key list corresponds to one first SK-counter list, the first SN key list comprises at least one third key, and the target PSCell communicates with the UE using the third SN key in the at least one third SN key.

19. The method according to claim 17, wherein the first configuration information comprises the at least one first SK-counter list, and after the sending, by an MN, target configuration information to UE, the method further comprises:
receiving, by the MN, a fourth RRCReconfigurationComplete message from the UE, wherein the fourth RRCReconfigurationComplete message comprises sixth indication information; and
sending, by the MN, the sixth indication information to the source SN, wherein
the sixth indication information is used to indicate at least one of the following:
a change type for change from the source PSCell to the target PSCell;
whether a second SN key has been used; and
whether a first SK-counter has been used, wherein
the change type comprises any one of the following: intra-SN CPC and inter-SN CPC; and
the second SN key is different from a first SN key, and the source PSCell communicates with the UE using the first SN key.

20. The method according to claim 13, wherein a CPC process is initiated by a source SN, and the method further comprises at least one of the following:
receiving, by the MN, a third SN message from the source SN, wherein the third SN message is used to request to configure subsequent CPAC;
sending, by the MN, a fourth SN message to a target SN, wherein the fourth SN message is used to request a candidate cell for subsequent CPAC, the fourth SN message comprises a second SN key list, the second SN key list corresponds to one first SK-counter list, the second SN key list comprises at least one fourth key, and the target PSCell communicates with the UE using the fourth key in the at least one fourth key; and
receiving, by the MN, a fifth SN message from the target SN, wherein the fifth SN message comprises the first configuration information.

21. The method according to claim 13, wherein a CPAC process is initiated by the MN, and the method further comprises at least one of the following:
sending, by the MN, a sixth SN message to a source SN, wherein the sixth SN message is used to request a candidate cell for subsequent CPAC, the sixth SN message comprises a third SN key list, the third SN key list corresponds to one first SK-counter list, the third SN key list comprises at least one fifth key, and the target PSCell communicates with the UE using the fifth key in the at least one fifth key; and
receiving, by the MN, a seventh SN message from the source SN, wherein
the seventh SN message comprises at least one of the following:
the target configuration information;
the first configuration information; and
an indication for a candidate cell supporting subsequent CPAC.

22. The method according to claim 13, wherein a CPAC process is initiated by the MN, and the method further comprises at least one of the following:
sending, by the MN, an eighth SN message to a target SN, wherein the eighth SN message is used to request a candidate cell for subsequent CPAC, the eighth SN message comprises a fourth SN key list, the fourth SN key list corresponds to one first SK-counter list, the fourth SN key list comprises at least one sixth key, and the target PSCell communicates with the UE using the sixth key in the at least one sixth key; and
receiving, by the MN, a ninth SN message from the target SN, wherein the ninth SN message comprises the first configuration information.

23. The method according to claim 13, wherein the first configuration information comprises the at least one first SK-counter list, and after the sending, by an MN, target configuration information to UE, the method further comprises:
receiving, by the MN, a second RRCReconfigurationComplete message from the UE, wherein
the second RRCReconfigurationComplete message comprises at least one of the following:
fifth indication information; and
a third RRCReconfigurationComplete message, wherein
the fifth indication information is used to indicate at least one of the following:
a change type for change from the source PSCell to the target PSCell;
whether a second SN key has been used; and
whether a first SK-counter has been used, wherein
the change type comprises any one of the following: intra-SN CPC and inter-SN CPC;
the second SN key is different from a first SN key, and the source PSCell communicates with the UE using the first SN key; and
the third RRCReconfigurationComplete message comprises the fifth indication information.

24. The method according to claim 13, wherein the first configuration information comprises the first cell deployment information; and
before the sending, by an MN, target configuration information to UE, the method further comprises:
receiving, by the MN, second cell deployment information, wherein the second cell deployment information is used to indicate the change type for PSCell change to the first candidate cell, and an information format of the second cell deployment information is different from that of the first cell deployment information; and
converting, by the MN, the second cell deployment information into the first cell deployment information.

25. The method according to claim 13, wherein the first configuration information comprises the first cell deployment information; and
before the sending, by an MN, target configuration information to UE, the method further comprises:
receiving, by the MN, the target configuration information; and
generating, by the MN, the first cell deployment information according to the target configuration information.

26. A CPAC configuration apparatus, wherein the CPAC configuration apparatus comprises a receiving module and a processing module;
the receiving module is configured to receive target configuration information sent by a network side device, wherein the target configuration information is used to configure at least one first candidate cell for subsequent CPAC, and the at least one first candidate cell is available for an intra-SN CPC process and an inter-SN CPC process; and
the processing module is configured to perform a first operation to change from a source PSCell to a target PSCell, wherein
the first operation comprises at least one of the following: the intra-SN CPC process and the inter-SN CPC process, and the target PSCell is the first candidate cell of the at least one first candidate cell.

27. The CPAC configuration apparatus according to claim 26, wherein the CPAC configuration apparatus further comprises an obtaining module;
the obtaining module is configured to obtain first configuration information; and
the processing module is specifically configured to perform the first operation according to the first configuration information.

28. The CPAC configuration apparatus according to claim 27, wherein the obtaining module is specifically configured to perform any one of the following:
receiving the first configuration information from the network side device; and
receiving intra-SN CPC configuration information from the network side device, and determining the first configuration information according to the intra-SN CPC configuration information.

29. The CPAC configuration apparatus according to claim 27, wherein the first configuration information comprises at least one of the followings:
at least one first SK-counter list;
first indication information;
at least one first cell list; and
first cell deployment information, wherein
each first SK-counter list comprises at least one SK-counter;
the first indication information is used to indicate whether to use an SK-counter in the first SK-counter list in a process of performing the first operation;
each first cell list comprises identification information of at least one first cell, and an SN key needs to be updated or an SN key does not need to be updated for PSCell change between first cells whose identification information is in a same first cell list; and
the first cell deployment information is used to indicate a change type for PSCell change to the first candidate cell, and the change type comprises any one of the following: intra-SN CPC and inter-SN CPC.

30. The CPAC configuration apparatus according to claim 29, wherein each first SK-counter list is associated with at least one of the following:
one SN;
one first candidate cell set; and
one first candidate cell, wherein
a candidate cell in one first candidate cell set is associated with one first SK-counter list.

31. The CPAC configuration apparatus according to claim 29, wherein the first cell deployment information comprises at least one of the followings:
at least one first candidate cell list;
at least one second candidate cell set;
at least one piece of second indication information; and
at least one piece of third indication information, wherein
each first candidate cell list comprises identification information of the first candidate cell belonging to a same SN in the at least one first candidate cell;
each second candidate cell set corresponds to one first candidate cell, and each second candidate cell set comprises identification information of the first candidate cell belonging to a same SN as the corresponding first candidate cell of the at least one first candidate cell;
each piece of second indication information corresponds to one first candidate cell, and each piece of second indication information is used to indicate at least one of the following: whether the corresponding first candidate cell and the source PSCell belong to a same SN, and the change type for change from the source PSCell to the corresponding first candidate cell; and
each piece of third indication information corresponds to one first candidate cell, each piece of third indication information is used to indicate a node identifier of an SN to which the corresponding first candidate cell belongs, and different SNs have different node identifiers.

32. The CPAC configuration apparatus according to claim 31, wherein the identification information comprises at least one of the followings:
a permanent cell identifier;
a temporary cell identifier; and
a conditional reconfiguration identifier, wherein
the temporary cell identifier is used to distinguish the first candidate cell, and different first candidate cells have different temporary cell identifiers.

33. The CPAC configuration apparatus according to claim 29, wherein the first configuration information comprises the at least one first SK-counter list, and the first operation comprises the intra-SN CPC process; and
the processing module is further configured to skip updating a first SN key using an SK-counter in the at least one first SK-counter list, wherein the source PSCell communicates with the CPAC configuration apparatus using the first SN key.

34. The CPAC configuration apparatus according to claim 29, wherein the first configuration information comprises the at least one first SK-counter list, and the first operation comprises the inter-SN CPC process; and
the processing module is further configured to perform a second operation, and use a first SK-counter, wherein
the second operation comprises any one of the following:
removing the first SK-counter from a second SK-counter list; and
adding a first marker to the first SK-counter in the second SK-counter list, wherein
the second SK-counter list is the first SK-counter list corresponding to the target PSCell in the at least one first SK-counter list; and
the first marker is used to mark an SK-counter that is not used or has been used by the CPAC configuration apparatus.

35. The CPAC configuration apparatus according to claim 29, wherein the first configuration information comprises the at least one first SK-counter list, and the first operation comprises the intra-SN CPC process;
the CPAC configuration apparatus further comprises a sending module; and
the sending module is configured to send a first RRCReconfigurationComplete message to the target PSCell, wherein the first RRCReconfigurationComplete message comprises fourth indication information, and
the fourth indication information is used to indicate at least one of the following:
a first change type for change from the source PSCell to the target PSCell;
whether a second SN key has been used; and
whether a first SK-counter has been used, wherein
the first change type comprises intra-SN CPC; and
the second SN key is different from a first SN key, and the source PSCell communicates with the CPAC configuration apparatus using the first SN key.

36. The CPAC configuration apparatus according to claim 29, wherein the first configuration information comprises the at least one first SK-counter list, and the first operation comprises the inter-SN CPC process;
the CPAC configuration apparatus further comprises a sending module; and
the sending module is configured to send a second RRCReconfigurationComplete message to the network side device, wherein
the second RRCReconfigurationComplete message comprises at least one of the following:
fifth indication information; and
a third RRCReconfigurationComplete message, wherein
the fifth indication information is used to indicate at least one of the following:
a second change type for change from the source PSCell to the target PSCell;
whether a second SN key has been used; and
whether a first SK-counter has been used, wherein
the second change type comprises inter-SN CPC;
the second SN key is different from a first SN key, and the source PSCell communicates with the CPAC configuration apparatus using the first SN key; and
the third RRCReconfigurationComplete message comprises the fifth indication information.

37. A CPAC configuration apparatus, wherein the CPAC configuration apparatus comprises a sending module; and
the sending module is configured to send target configuration information to UE, wherein the target configuration information is used to configure at least one first candidate cell for subsequent CPAC, and the at least one first candidate cell is available for an intra-SN CPC process and an inter-SN CPC process;
the at least one first candidate cell is used by the UE to perform a first operation to change from a source PSCell to a target PSCell; and
the first operation comprises at least one of the following: the intra-SN CPC process and the inter-SN CPC process, and the target PSCell is the first candidate cell of the at least one first candidate cell.

38. The CPAC configuration apparatus according to claim 37, wherein
the sending module is further configured to send first configuration information to the UE, wherein
the first configuration information comprises at least one of the following:
at least one first SK-counter list;
first indication information;
at least one first cell list; and
first cell deployment information, wherein
each first SK-counter list comprises at least one SK-counter;
the first indication information is used to indicate whether to use an SK-counter in the first SK-counter list in a process of performing the first operation;
each first cell list comprises identification information of at least one first cell, and an SN key needs to be updated or an SN key does not need to be updated for PSCell change between first cells whose identification information is in a same first cell list; and
the first cell deployment information is used to indicate a change type for PSCell change to the first candidate cell, and the change type comprises any one of the following: intra-SN CPC and inter-SN CPC.

39. The CPAC configuration apparatus according to claim 38, wherein a CPC process is initiated by a source SN;
the CPAC configuration apparatus further comprises a receiving module; and
the receiving module is configured to receive a first SN message from the source SN, wherein the first SN message comprises the first configuration information.

40. The CPAC configuration apparatus according to claim 39, wherein the first configuration information comprises the at least one first SK-counter list; and
the sending module is further configured to send a second SN message to the source SN, wherein
the second SN message comprises a first SN key list, the first SN key list corresponds to one first SK-counter list, the first SN key list comprises at least one third key, and the target PSCell communicates with the UE using the third SN key in the at least one third SN key.

41. The CPAC configuration apparatus according to claim 39, wherein the first configuration information comprises the at least one first SK-counter list;
the receiving module is further configured to receive a fourth RRCReconfigurationComplete message from the UE, wherein the fourth RRCReconfigurationComplete message comprises sixth indication information; and
the sending module is further configured to send the sixth indication information to the source SN, wherein
the sixth indication information is used to indicate at least one of the following:
a change type for change from the source PSCell to the target PSCell;
whether a second SN key has been used; and
whether a first SK-counter has been used, wherein
the change type comprises any one of the following: intra-SN CPC and inter-SN CPC; and
the second SN key is different from a first SN key, and the source PSCell communicates with the UE using the first SN key.

42. The CPAC configuration apparatus according to claim 38, wherein a CPC process is initiated by a source SN;
the CPAC configuration apparatus further comprises a receiving module;
the modules of the CPAC configuration apparatus are further configured to perform at least one of the following:
the receiving module is configured to receive a third SN message from the source SN, wherein the third SN message is used to request to configure subsequent CPAC;
the sending module is further configured to send a fourth SN message to a target SN, wherein the fourth SN message is used to request a candidate cell for subsequent CPAC, the fourth SN message comprises a second SN key list, the second SN key list corresponds to one first SK-counter list, the second SN key list comprises at least one fourth key, and the target PSCell communicates with the UE using the fourth key in the at least one fourth key; and
the receiving module is further configured to receive a fifth SN message from the target SN, wherein the fifth SN message comprises the first configuration information.

43. The CPAC configuration apparatus according to claim 38, wherein a CPAC process is initiated by the CPAC configuration apparatus;
the CPAC configuration apparatus further comprises a receiving module;
the modules of the CPAC configuration apparatus are further configured to perform at least one of the following:
the sending module is further configured to send a sixth SN message to a source SN, wherein the sixth SN message is used to request a candidate cell for subsequent CPAC, the sixth SN message comprises a third SN key list, the third SN key list corresponds to one first SK-counter list, the third SN key list comprises at least one fifth key, and the target PSCell communicates with the UE using the fifth key in the at least one fifth key; and
the receiving module is configured to receive a seventh SN message from the source SN, wherein
the seventh SN message comprises at least one of the following:
the target configuration information;
the first configuration information; and
an indication for a candidate cell supporting subsequent CPAC.

44. The CPAC configuration apparatus according to claim 38, wherein a CPAC process is initiated by the CPAC configuration apparatus;
the CPAC configuration apparatus further comprises a receiving module;
the modules of the CPAC configuration apparatus are further configured to perform at least one of the following:
the sending module is further configured to send an eighth SN message to a target SN, wherein the eighth SN message is used to request a candidate cell for subsequent CPAC, the eighth SN message comprises a fourth SN key list, the fourth SN key list corresponds to one first SK-counter list, the fourth SN key list comprises at least one sixth key, and the target PSCell communicates with the UE using the sixth key in the at least one sixth key; and
the receiving module is further configured to receive a ninth SN message from the target SN, wherein the ninth SN message comprises the first configuration information.

45. The CPAC configuration apparatus according to claim 38, wherein the first configuration information comprises the at least one first SK-counter list;
the CPAC configuration apparatus further comprises a receiving module;
the receiving module is configured to receive a second RRCReconfigurationComplete message from the UE, wherein
the second RRCReconfigurationComplete message comprises at least one of the following:
fifth indication information; and
a third RRCReconfigurationComplete message, wherein
the fifth indication information is used to indicate at least one of the following:
a change type for change from the source PSCell to the target PSCell;
whether a second SN key has been used; and
whether a first SK-counter has been used, wherein
the change type comprises any one of the following: intra-SN CPC and inter-SN CPC;
the second SN key is different from a first SN key, and the source PSCell communicates with the UE using the first SN key; and
the third RRCReconfigurationComplete message comprises the fifth indication information.

46. The CPAC configuration apparatus according to claim 38, wherein the first configuration information comprises the first cell deployment information;
the CPAC configuration apparatus further comprises a receiving module and a processing module;
the receiving module is configured to receive second cell deployment information, wherein the second cell deployment information is used to indicate the change type for PSCell change to the first candidate cell, and an information format of the second cell deployment information is different from that of the first cell deployment information; and
the processing module is configured to convert the second cell deployment information received by the receiving module into the first cell deployment information.

47. The CPAC configuration apparatus according to claim 38, wherein the first configuration information comprises the first cell deployment information;
the CPAC configuration apparatus further comprises a receiving module and a processing module;
the receiving module is configured to receive the target configuration information; and
the processing module is configured to generate the first cell deployment information according to the target configuration information received by the receiving module.

48. A terminal, comprising a processor and a memory, wherein the memory stores a program or an instruction that is executable on the processor, and the program or the instruction is executed by the processor to implement the steps of the CPAC configuration method according to any one of claims 1 to 11.

49. A network side device, comprising a processor and a memory, wherein the memory stores a program or an instruction that is executable on the processor, and the program or the instruction is executed by the processor to implement the steps of the CPAC configuration method according to any one of claims 12 to 25.

50. A readable storage medium, wherein the readable storage medium stores a program or an instruction, and when the program or the instruction is executed by a processor, the steps of the CPAC configuration method according to any one of claims 1 to 11 are implemented, or the steps of the CPAC configuration method according to any one of claims 12 to 25 are implemented.
